(19)

Europäisches Patentamt

European Patent Office

Office européen des brevets

(11) **EP 4 366 186 A1**

(12) **EUROPEAN PATENT APPLICATION**
published in accordance with Art. 153(4) EPC

(43) Date of publication:
**08.05.2024 Bulletin 2024/19**

(21) Application number: **22851803.1**

(22) Date of filing: **05.07.2022**

(51) International Patent Classification (IPC):
**H04B 7/06** (2006.01)     **H04B 7/04** (2017.01)
**H04L 1/06** (2006.01)

(52) Cooperative Patent Classification (CPC):
**H04B 7/04; H04B 7/06; H04L 1/06; H04L 5/00; H04W 24/10**

(86) International application number:
**PCT/CN2022/103861**

(87) International publication number:
**WO 2023/011088 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.07.2021  CN 202110877183**

(71) Applicant: **Huawei Technologies Co., Ltd.
Longgang
Shenzhen, Guangdong 518129 (CN)**

(72) Inventors:
• **LI, Shengyu
  Shenzhen, Guangdong 518129 (CN)**
• **GUAN, Lei
  Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **CHANNEL STATE INFORMATION FEEDBACK METHOD AND COMMUNICATION APPARATUS**

(57)     This application provides a channel state information feedback method and a communication apparatus. The method includes: A network device sends reference signal configuration information to a terminal device, where the reference signal configuration information is used for configuring $N_1$ reference signals, and the $N_1$ reference signals correspond to $N$ antenna ports; the terminal device determines $K_1$ first channel vectors based on $K_1$ combination matrices and measurement results of the $N_1$ reference signals on the $N$ antenna ports, where an $i^{th}$ combination matrix in the $K_1$ combination matrices is used for combining the $N$ antenna ports into $M_i$ antenna ports; the terminal device further obtains $K_1$ pieces of channel state information CSI based on the $K_1$ first channel vectors; and then, the terminal device sends $K_2$ pieces of CSI in the $K_1$ pieces of CSI to the network device. According to the method described in this application, the network device does not need to send a downlink reference signal in each channel shutdown pattern, and the terminal device can obtain more pieces of CSI in the channel shutdown pattern based on limited pilot overheads.

FIG. 9

## Description

This application claims priority to Chinese Patent Application No. 202110877183.5, filed with the China National Intellectual Property Administration on July 31, 2021 and entitled "CHANNEL STATE INFORMATION FEEDBACK METHOD AND COMMUNICATION APPARATUS", which is incorporated herein by reference in its entirety.

## TECHNICAL FIELD

This application relates to the field of communication technologies, and in particular, to a channel state information feedback method and a communication apparatus.

## BACKGROUND

A multiple-input multiple-output (multiple-input multiple-output, MIMO) technology is outstanding because the technology can use limited spectrum resources to greatly improve transmission reliability and increase a transmission capacity. In a low frequency, the MIMO technology is mainly implemented in digital domain, and includes digital domain precoding and digital domain beamforming. To be specific, one antenna element may correspond to one digital channel. The digital channel may include a whole set of processing components including a digital-to-analog converter/analog-to-digital converter (digital-to-analog converter/analog-to-digital converter, DAC/ADC), a filter (filter), and a power amplifier (power amplifier, PA). However, in a high frequency, especially in a millimeter wave (millimeter wave, mmWave), a frequency of a radio frequency signal is excessively high, and a quantity of antenna elements that can be deployed on a base station side is excessively large, for example, 1024 or 2048. In addition, an extremely high frequency of the radio frequency signal and an extremely large available bandwidth cause increasingly high costs of the components such as the DAC/ADC, the filter, and the PA. It is costly to deploy digital channels for all antenna elements in one-to-one correspondence, and a large quantity of processing components further causes an excessively large size of the base station. Therefore, in the high frequency, mainstream base station products all use a hybrid beamforming architecture. To be specific, one digital channel corresponds to a plurality of analog channels, and each analog channel corresponds to one or more antenna elements. In this way, a quantity of digital channels is reduced, to reduce deployment costs and reduce the size of the base station.

When cell load is light, the base station may shut down some transmit and receive channels (for example, digital channels or analog channels) to reduce power consumption of components on these channels. Correspondingly, the base station may use more time-frequency resources to ensure that an average transmission rate does not decrease, to ensure data transmission performance. The transmit and receive channel is associated with some antenna elements, and the transmit and receive channel is represented as an antenna port in a protocol. Therefore, channel shutdown is also referred to as "antenna port shutdown" or "antenna shutdown" for short. Currently, channel shutdown used in the product is semi-static. To be specific, a channel shutdown pattern (pattern) is selected based on a traffic volume prediction within a time period, and service transmission is performed based on the channel shutdown pattern. However, semi-static channel shutdown can only match an average traffic volume within a time period. In each transmission time interval (transmission time interval, TTI), service arrival fluctuates. As a result, a traffic volume in some TTIs is large. In this case, shutdown of an excessively large quantity of channels limits a transmission rate. A traffic volume in other TTIs is small. In this case, an energy saving gain cannot be maximized due to shutdown of an excessively small quantity of channels. Therefore, an on-demand and dynamic channel shutdown solution is proposed for each TTI.

Dynamic channel shutdown is also called on-demand channel shutdown. A core idea of dynamic channel shutdown is that in each TTI, the base station maximizes, on a premise of ensuring a service transmission requirement, a channel shutdown proportion based on a traffic volume to be transmitted in the TTI, to obtain a maximum instantaneous energy saving gain without affecting user experience. However, because traffic volumes in different TTIs are different, expected channel shutdown patterns are also different. Therefore, the base station cannot send a downlink pilot signal (namely, a downlink reference signal) in advance based on the channel shutdown pattern to enable UE to measure and feed back channel state information (channel state information, CSI) in the channel shutdown pattern. Accurate link adaptive adjustment cannot be implemented.

In a solution, a base station predefines several antenna channel patterns, and then sends a downlink pilot signal in each channel shutdown pattern in advance, and a terminal device measures and reports CSI respectively corresponding to a plurality of downlink pilot signals. For example, the base station may separately send the downlink pilot signals in a slot 0 based on five channel shutdown patterns, and the terminal device measures and reports the CSI respectively corresponding to the plurality of downlink pilot signals in the slot 0. Subsequently, a network device may select, from CSI corresponding to the five channel shutdown patterns in a slot 1 to a slot 10, CSI corresponding to a corresponding channel shutdown pattern for data transmission. It is clear that, this causes a problem that overheads of the downlink pilot signals increase linearly.

## SUMMARY

Embodiments of this application provide a channel state information feedback method and a communication apparatus, to determine more pieces of CSI in a channel shutdown pattern based on limited downlink pilot signal overheads.

According to a first aspect, this application provides a channel state information feedback method. An example in which a terminal device performs the method is used. The method includes: The terminal device receives reference signal configuration information from a network device, where the reference signal configuration information is used for configuring $N_1$ reference signals, $N_1$ is a positive integer, the $N_1$ reference signals correspond to $N$ antenna ports, and $N$ is an integer greater than 1; obtains $K_1$ first channel vectors based on $K_1$ combination matrices and measurement results of the $N_1$ reference signals on the $N$ antenna ports, where an $i^{th}$ combination matrix in the $K_1$ combination matrices is used for combining the $N$ antenna ports into $M_i$ antenna ports, an $i^{th}$ first channel vector in the $K_1$ first channel vectors is a channel vector on the $M_i$ antenna ports, $M_i$ is less than or equal to $N$, $M_i$ is a positive integer, $K_1$ is a positive integer, and $1 \leq i \leq K_1$; obtains $K_1$ pieces of channel state information CSI based on the $K_1$ first channel vectors; and sends $K_2$ pieces of CSI in the $K_1$ pieces of CSI to the network device, where $K_2$ is a positive integer less than or equal to $K_1$.

In the method described in the first aspect, in an HBF architecture, the $N$ antenna ports may correspond to $N$ analog channel subarrays. One digital channel corresponds to a plurality of analog channel subarrays, and one digital channel corresponds to one antenna port. One combination matrix is used for combining the $N$ analog channel subarrays into a plurality of digital channels. Therefore, one combination matrix is in one-to-one correspondence with one analog channel shutdown pattern. CSI corresponding to a plurality of digital channels in an analog channel shutdown pattern may be obtained based on a combination matrix corresponding to the analog channel shutdown pattern and measurement results on all of the analog channel subarrays. It can be learned that, according to the method described in the first aspect, the network device does not need to send a downlink reference signal in each analog channel shutdown pattern, but needs to send only one common downlink reference signal, and the terminal device can obtain more pieces of CSI in the analog channel shutdown pattern based on limited pilot overheads. In a full aperture architecture, the $N$ antenna ports may correspond to $N$ digital channels. After some digital channels are closed, corresponding antenna elements may be switched to remaining digital channels, so that a quantity of available antenna elements can be reserved to maintain a maximum antenna array gain. One combination matrix is used for combining the $N$ digital channels. To be specific, the some digital channels are shut down and the corresponding antenna elements are switched to the remaining digital channels. Therefore, one combination matrix is in one-to-one correspondence with one digital channel shutdown pattern. CSI in a digital channel shutdown pattern may be obtained based on a combination matrix corresponding to the digital channel shutdown pattern and measurement results on all of the digital channels. It can be learned that, according to the method described in the first aspect, the network device does not need to send a downlink reference signal in each digital channel shutdown pattern, but needs to send only one common downlink reference signal, and the terminal device can obtain more pieces of CSI in the digital channel shutdown pattern based on limited pilot overheads.

According to a second aspect, this application provides a channel state information feedback method. An example in which a network device performs the method is used. The method includes: The network device sends reference signal configuration information to a terminal device, where the reference signal configuration information is used for configuring $N_1$ reference signals, $N_1$ is a positive integer, the $N_1$ reference signals correspond to $N$ antenna ports, and $N$ is an integer greater than 1; sends the $N_1$ reference signals on the $N$ antenna ports; and receives $K_2$ pieces of channel state information CSI in $K_1$ pieces of CSI from the terminal device, where $K_2$ is a positive integer less than or equal to $K_1$, the $K_1$ pieces of CSI are obtained based on $K_1$ first channel vectors, the $K_1$ first channel vectors are obtained based on $K_1$ combination matrices and measurement results of the $N_1$ reference signals on the $N$ antenna ports, an $i^{th}$ combination matrix in the $K_1$ combination matrices is used for combining the $N$ antenna ports into $M_i$ antenna ports, an $i^{th}$ first channel vector in the $K_1$ first channel vectors is a channel vector on the $M_i$ antenna ports, $M_i$ is less than or equal to $N$, $M_i$ is a positive integer, $K_1$ is a positive integer, and $1 \leq i \leq K_1$.

In a possible implementation of the first aspect and the second aspect, the $M_i$ antenna ports correspond to $M_i$ digital channels, the $N$ antenna ports correspond to $N$ analog channel subarrays, and $M_i$ is less than $N$.

In a possible implementation of the first aspect and the second aspect, the $M_i$ antenna ports correspond to $M_i$ remaining activated digital channels in one digital channel shutdown pattern, the $N$ antenna ports correspond to all of the $N$ digital channels, and $M_i$ is less than $N$.

In a possible implementation of the first aspect and the second aspect, the $K_1$ pieces of CSI include CSI#$j$, the CSI#$j$ includes a precoding matrix indicator PMI, and the PMI is used for determining a precoding matrix, recommended by the terminal device, of the network device on $M_j$ antenna ports corresponding to CSI#$j$ in CSI#$j$.

In a possible implementation of the first aspect and the second aspect, that the $i^{th}$ combination matrix is used for combining the $N$ antenna ports into the $M_i$ antenna ports means that the $i^{th}$ combination matrix is used for combining second channel vectors into the first channel vector on the $M_i$ antenna ports, and the second channel vectors are channel vectors that are on the $N$ antenna ports and that are obtained based on the measurement results on the $N$ antenna ports. Based on this possible implementation, one combination matrix may be used for obtaining a channel vector in one channel shutdown pattern.

In a possible implementation of the first aspect and the second aspect, the $N$ antenna ports are grouped into $N_2$ antenna port groups, $N_2$ is an integer greater than 1, different antenna port groups in the $N_2$ antenna port groups correspond to different time domain positions, each antenna port group in the $N_2$ antenna port groups includes $N_3$ antenna ports, $N_3$ is a positive integer, and $N = N_2 \times N_3$. Based on this possible implementation, the antenna ports are grouped, and different antenna port groups correspond to different time domain positions, so that when the network device sends the reference signal in the $N_2$ antenna port groups, analog channel subarray switching can be more easily implemented.

In a possible implementation of the first aspect and the second aspect, $N_2 = N_1$; or $N_2/N_1$ is an integer greater than 1. Based on this possible implementation, one reference signal may correspond to one antenna port group, or a plurality of antenna port groups may correspond to one reference signal. This helps reduce reference signal overheads.

In a possible implementation of the first aspect and the second aspect, the second channel vector is $H_2$, the $i^{th}$ first channel vector is $H_{1i}$, $H_{1i} = A_i \times H_2$, $A_i$ is the $i^{th}$ combination matrix, and $A_i = [a_{m,n}]_{1 \leq m \leq M_i, 1 \leq n \leq N}$, where $a_{m,n}$ is an element in an $m^{th}$ row and an $n^{th}$ column of the combination matrix $A_i$. Optionally, $a_{m,n}$ represents a combination weight from an $n^{th}$ antenna port in the $N$ antenna ports to an $m^{th}$ combined port in the $M_i$ antenna ports. Based on this possible implementation, a channel vector in a channel shutdown pattern corresponding to a combination matrix can be accurately determined.

In a possible implementation of the first aspect and the second aspect, $a_{m,n}$ is 1 or 0; or $a_{m,n}$ is 0 or $a_m$, and $a_m$ is protocol-predefined or $a_m$ is configured by the network device.

In a possible implementation of the first aspect and the second aspect, $a_{m,n1}$ and $a_{m,n2}$ exist in $A_i$, $a_{m,n1} > 0$, $a_{m,n2} > 0$, and $n1$ is not equal to $n2$. Based on this possible implementation, one combined antenna port needs to be obtained by combining at least two antenna ports in the $N$ antenna ports.

In a possible implementation of the first aspect and the second aspect, for $n \notin S_m$, $a_{m,n} = 0$, where $S_m$ is a pre-combination port set corresponding to an $m^{th}$ combined port, an intersection set of $S_{m1}$ and $S_{m2}$ is an empty set, and $m_1$ and $m_2$ are sequence numbers of any two different combined ports. Based on this possible implementation, different combined antenna ports are obtained by combining different antenna ports in the $N$ antenna ports.

In a possible implementation of the first aspect, first indication information is received from the network device, where the first indication information indicates the $K_1$ combination matrices. In this possible implementation, the $K_1$ combination matrices are not fixed, and may be indicated by the network device. In this way, the terminal device can more flexibly determine CSI in different channel shutdown patterns.

In a possible implementation of the second aspect, first indication information is sent to the terminal device, where the first indication information indicates the $K_1$ combination matrices. In this possible implementation, the $K_1$ combination matrices are not fixed, and may be indicated by the network device. In this way, the terminal device can more flexibly determine CSI in different channel shutdown patterns.

In a possible implementation of the first aspect and the second aspect, the $K_1$ combination matrices are $K_1$ combination matrices in $K$ combination matrices, and the first indication information indicates sequence numbers of the $K_1$ combination matrices in a set including the $K$ combination matrices, where the $K$ combination matrices are protocol-predefined or indicated by the network device by using second indication information, and $K$ is an integer greater than or equal to $K_1$. In this optional manner, the network device may indicate a plurality of combination matrices to the terminal device in advance, and subsequently flexibly indicate, by using the first indication information and as required, a combination matrix to be used by the terminal device. Therefore, based on this possible implementation, flexibility of indicating the combination matrix by the network device can be improved.

In a possible implementation of the first aspect and the second aspect, $K_2$ is equal to $K_1$. To be specific, the terminal device feeds back all of CSI determined by the terminal device.

In a possible implementation of the first aspect and the second aspect, $K_2$ is less than $K_1$, where

the $K_2$ pieces of CSI are $K_2$ pieces of CSI with a maximum utility function in the $K_1$ pieces of CSI, and the utility function of the CSI is related to a rank indicator RI and a channel quality indicator CQI in the CSI;
the $K_2$ pieces of CSI are one or more pieces of CSI with a utility function whose fallback value is less than or equal to a first threshold in the $K_1$ pieces of CSI, where a fallback value of a utility function of first CSI is a ratio of a utility function of second CSI to the utility function of the first CSI, the second CSI is CSI with a maximum utility function in the $K_1$ pieces of CSI, and the utility function of the CSI is related to an RI and a CQI in the CSI; or
the $K_2$ pieces of CSI are CSI with a minimum utility function in CSI with a utility function whose fallback value is less than or equal to a first threshold in the $K_1$ pieces of CSI, where a fallback value of a utility function of first CSI is a ratio of a utility function of second CSI to the utility function of the first CSI, the second CSI is CSI with a maximum utility function in the $K_1$ pieces of CSI, and the utility function of the CSI is related to an RI and a CQI in the CSI.

Based on this possible implementation, CSI reporting overheads can be reduced.

In a possible implementation of the first aspect and the second aspect, the $M_i$ combined antenna ports are in one-to-one correspondence with the $M_i$ digital channels, the $N$ antenna ports are in one-to-one correspondence with the $N$ analog channel subarrays, and one digital channel corresponds to one or more analog channel subarrays.

According to a third aspect, this application provides a communication apparatus. The communication apparatus may be a terminal device, an apparatus in the terminal device, or an apparatus that can be used together with the terminal device. The communication apparatus may alternatively be a chip system. The communication apparatus may perform the method according to the first aspect. A function of the communication apparatus may be implemented by hardware, or may be implemented by hardware by executing corresponding software. The hardware or the software includes one or more units or modules corresponding to the function. The unit or the module may be software and/or hardware. For operations performed by the communication apparatus and beneficial effects thereof, refer to the method in the first aspect and the beneficial effects thereof.

According to a fourth aspect, this application provides a communication apparatus. The communication apparatus may be a network device, an apparatus in the network device, or an apparatus that can be used together with the network device. The communication apparatus may alternatively be a chip system. The communication apparatus may perform the method according to the second aspect. A function of the communication apparatus may be implemented by hardware, or may be implemented by hardware by executing corresponding software. The hardware or the software includes one or more units or modules corresponding to the function. The unit or the module may be software and/or hardware. For operations performed by the communication apparatus and beneficial effects thereof, refer to the method in the second aspect and the beneficial effects thereof.

According to a fifth aspect, this application provides a communication apparatus. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to the first aspect or the second aspect by using a logic circuit or by executing code instructions.

According to a sixth aspect, this application provides a computer-readable storage medium, where the storage medium stores a computer program or instructions, and when the computer program or the instructions are executed by a communication apparatus, the method according to the first aspect or the second aspect is implemented.

According to a seventh aspect, this application provides a computer program product including instructions. When a communication apparatus reads and executes the instructions, the communication apparatus is enabled to perform the method according to any one of the first aspect or the second aspect.

According to an eighth aspect, this application provides a communication system, including the communication apparatus configured to perform the method according to the first aspect and the communication apparatus configured to perform the method according to the second aspect.

## BRIEF DESCRIPTION OF DRAWINGS

FIG. 1 is a schematic diagram of an HBF architecture;

FIG. 2 is a schematic diagram of an analog channel subarray in an HBF architecture according to an embodiment of this application;

FIG. 3 is a schematic diagram of a full aperture architecture according to an embodiment of this application;

FIG. 4 is a schematic diagram of a mode of digital channel shutdown and antenna switching in a full aperture architecture according to an embodiment of this application;

FIG. 5 is a schematic diagram of another mode of digital channel shutdown and antenna switching in a full aperture architecture according to an embodiment of this application;

FIG. 6 is a schematic diagram of still another mode of digital channel shutdown and antenna switching in a full aperture architecture according to an embodiment of this application;

FIG. 7 is a schematic diagram of still another mode of digital channel shutdown and antenna switching in a full aperture architecture according to an embodiment of this application;

FIG. 8 is a schematic diagram of a communication system according to an embodiment of this application;

FIG. 9 is a schematic flowchart of a channel state information feedback method according to an embodiment of this application;

FIG. 10 is a schematic diagram of another HBF architecture according to an embodiment of this application;

FIG. 11 is a schematic diagram of still another HBF architecture according to an embodiment of this application;

FIG. 12 is a schematic flowchart of another channel state information feedback method according to an embodiment of this application;

FIG. 13 is a schematic flowchart of still another channel state information feedback method according to an embodiment of this application;

FIG. 14 is a schematic diagram of a structure of a communication apparatus according to an embodiment of this application; and

FIG. 15 is a schematic diagram of a structure of another communication apparatus according to an embodiment of this application.

## DESCRIPTION OF EMBODIMENTS

In the specification, the claims, and the accompanying drawings of this application, terms "first", "second", and the like are intended to distinguish between different objects but do not describe a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular feature, structure, or characteristic described with reference to this embodiment may be included in at least one embodiment of this application. The phrase shown in various positions in this specification may not necessarily refer to a same embodiment, and is not an independent or optional embodiment exclusive from another embodiment. It should be understood that embodiments described in this specification may be combined with another embodiment.

For ease of understanding related content in embodiments of this application, some concepts related to embodiments of this application are described.

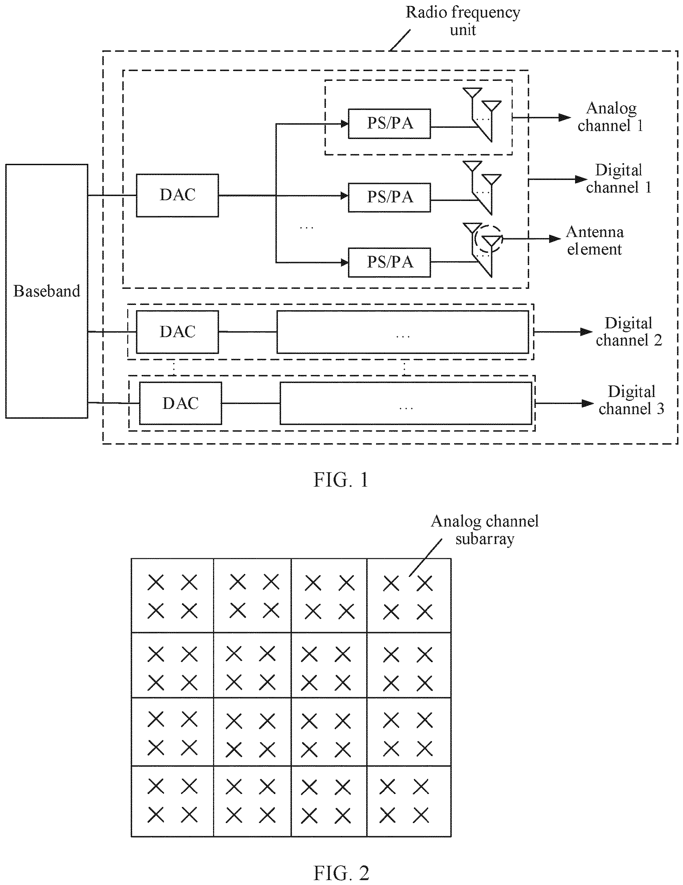

1. Hybrid beamforming (hybrid beamforming, HBF) architecture: In a high frequency, mainstream base station products all use the HBF architecture. To be specific, one digital channel corresponds to a plurality of analog channels, and each analog channel corresponds to one or more antenna elements. In this way, a quantity of digital channels can be reduced, to reduce deployment costs and a size. FIG. 1 is a schematic diagram of an HBF architecture on a radio frequency unit of an mmWave base station. As shown in FIG. 1, the radio frequency unit includes a plurality of digital channels (digital chains), each digital channel is connected to a plurality of analog channels (analog chains), and each analog channel is connected to one or more antenna elements. FIG. 1 uses downlink transmission as an example. For the mmWave base station, a quantity of digital channels is generally small, for example, 4 or 8, and a quantity of analog channels associated with each digital channel is large, for example, 128 or 256. In embodiments of this application, a channel may also be referred to as a link, and one channel includes a transmit channel and a receive channel.

2. Antenna element: The antenna element is a physical entity, a smallest physical entity for constituting an antenna array, and a smallest electromagnetic wave transmit unit. Generally, the antenna element is a half-wave element, an omnidirectional element, a dot element, a linear element, or a circular element.

3. Transmit and receive channel: The transmit and receive channel is a digital channel or an analog channel. The transmit and receive channel is a physical concept. One transmit and receive channel may be usually associated with one or more antenna elements to form a 1-driving-N connection architecture. A mapping weight may be set between the transmit and receive channel and the antenna elements. For example, the mapping weight is implemented by adjusting azimuths of the elements, or is implemented by adding a phase shifter and adjusting a phase of the phase shifter.

(1) Digital channel: One digital channel is associated with one ADC/DAC, and a quantity of digital channels indicates a quantity of antenna ports visible in digital domain. One-stream or multi-stream signals may be mapped to the foregoing plurality of digital channels in digital domain, and different mapping manners may be used at different frequency positions.

(2) Analog channel: The analog channel is mainly used in the HBF architecture. One digital channel may be associated with one or more analog channels through the ADC/DAC. Signal processing between the digital channel and the analog channel can be performed only in analog domain, and needs to be implemented by using an analog device. For example, a filter is used for shaping, a PA is used for power amplification, and a phase shifter (phase shifter, PS) is used for phase adjustment. In addition, the processing is broadband. To be specific, different power amplification coefficients or phase adjustment coefficients cannot be added to different frequency positions.

4. Antenna port (antenna port): The antenna port is a logical concept in a standard, and corresponds to one or more antenna elements. The digital channel is a physical concept. A quantity N of digital channels on one radio frequency unit is fixed. In different transmission processes, the radio frequency unit may have different quantities of antenna ports. In other words, one antenna port may be mapped to a subset of the foregoing N digital channels. Different antenna ports correspond to different virtual mapping manners. In the standard, different antenna ports correspond to different transport streams.

This application mainly focuses on an antenna port of a downlink reference signal, for example, a channel state information-reference signal (CSI-reference signal, CSI-RS) antenna port. Generally, although the CSI-RS antenna port is also a logical concept, in most scenarios, especially in an FDD system, during CSI measurement, the base station enables the CSI-RS antenna port and the digital channel on the radio frequency unit to be in one-to-one correspondence. In this way, UE may obtain a channel matrix on each digital channel on the radio frequency unit by measuring a CSI-RS. However, the standard also supports sending a pre-coded CSI-RS (pre-coded CSI-RS). For example, the radio frequency unit has 32 digital channels, but may send 16-port CSI-RSs. Each CSI-RS port corresponds to one logical port, and each logical port is associated with one mapping vector of 1 to 32 digital channels. Currently, the pre-coded CSI-RSs are mostly used in a scenario in which a base station end has learned of information about some or all of channels. For example, in a TDD system, the base station has obtained a channel matrix based on an SRS.

5. Channel state information report (CSI report) configuration information: One CSI report is generally used for performing channel/interference measurement on a downlink frequency and feeding back corresponding CSI. The CSI report configuration information may include the following configurations.

(1) Report type configuration: For example, the report type configuration indicates periodic CSI (periodic CSI, P-CSI), semi-persistent CSI (semi-persistent CSI, SP-CSI), or aperiodic CSI (aperiodic CSI, A-CSI), and indicates information such as a periodicity configuration for reporting, a start offset value, or a trigger offset value.

(2) Feedback amount configuration: To be specific, the feedback amount configuration indicates a configuration of feedback amounts, including, for example, a reference signal resource indicator (CSI-RS resource indicator, CRI), a synchronization signal/physical broadcast channel block resource indicator (synchronization signal/physical broadcast channel block resource indicator, SSBRI), a rank indicator (rank indicator, RI), a precoding matrix indicator (precoding matrix indicator, PMI), a channel quality indicator (channel quality indicator, CQI), a layer indicator (layer indicator, LI), a layer 1 reference signal received power (layer 1 reference signal received power, L1-RSRP), and a layer 1 signal to interference plus noise ratio (layer 1-SINR, L1-SINR). The RI indicates a quantity of transport streams that is recommended by the UE and that can be used when the base station performs data transmission, the PMI indicates a precoding matrix recommended, based on the quantity of transport streams, to be used, and the CQI indicates a modulation and coding scheme recommended, based on the quantity of transport streams and the precoding matrix, to be used. It is expected that a preset block error rate can be achieved by using the modulation and coding scheme. The LI notifies the base station of a stream with best received quality in the indicated transport streams. When the base station configures a plurality of CSI-RSs or SSBs for CSI measurement, the CRI and the SSBRI indicate a resource that is notified by the UE to the base station and based on which current measurement is performed.

(3) Bandwidth configuration of the feedback amount: For example, each feedback amount is wideband feedback or narrowband feedback.

(4) Specific configuration information of each feedback amount: For example, the specific configuration information is a value restriction set of the RI, a codebook model of the PMI, and measurement table information of the CQI.

(5) Reference signal configuration information: The reference signal configuration information is used for configuring one or more reference signals.

6. CSI measurement: (1) One-shot measurement: One-shot measurement is to perform channel or interference measurement by using the latest reference signal, and calculate, based on a measurement result, CSI reported this time.

(2) Smooth measurement: For one CSI report, it may be separately specified whether to use a smoothed measurement result to perform CSI calculation during channel measurement and interference measurement. Smooth measurement is to calculate, based on all measurement results of configured reference signals in time domain (where the reference signals are usually periodically or semi-persistently sent, and therefore there are a plurality of measurement results in time domain), CSI reported this time. A specific smooth solution is implemented by a terminal device.

7. Channel shutdown technology: From perspective of base station energy saving, when cell load is light, some digital channels or analog channels can be selected to be closed to reduce power consumption of components on the channels. Currently, a channel shutdown technology on a base station side may be classified into semi-static shutdown and dynamic shutdown.

(1) Semi-static channel shutdown: Generally, shutdown time is at a minute level or even an hour level. The base station uses a shutdown periodicity P. Then, based on current and previous service arrival conditions and a specific algorithm, a service arrival condition in a next time period P is predicted, and a channel shutdown pattern is selected. For example, half of channels, a quarter of channels, or three-quarters of channels are shut down or not shut down. Then, in the time period P, the base station sends and controls a reference signal/performs data transmission based on a channel configuration obtained after shutdown.

(2) Dynamic channel shutdown: Dynamic channel shutdown is also called on-demand (on-demand) antenna shutdown. A core idea of dynamic channel shutdown is that the base station maximizes, on a premise of ensuring a service transmission requirement, an antenna shutdown proportion based on a traffic volume to be transmitted in a TTI, to obtain a maximum instantaneous energy saving gain without affecting user experience.

8. Channel shutdown in the HBF architecture: Channel shutdown in the HBF architecture may be performed at a granularity of a digital channel or a granularity of an analog channel. In the HBF architecture, there are generally only four or eight digital channels, and each digital channel is associated with hundreds of analog channels. Therefore, analog channel shutdown can provide shutdown at a finer granularity. For example, as shown in FIG. 2, analog channels associated with one digital channel may be divided into 16 analog channel subarrays. One analog channel subarray includes one or more analog channels. Then, shutdown is performed at a unit of the analog channel subarray, and 16 shutdown levels may be obtained. To be specific, zero analog channel subarrays, one analog channel subarray, ..., and 16 analog channel subarrays may be shut down, and 16 shutdown degrees are obtained in total. In addition, even if two subarrays are shut down, different subarray shutdown options correspond to different performance. In this way, there are more shutdown patterns in total, and a quantity is up to $2^{16}$. More shutdown levels and combinations can provide more degrees of freedom of shutdown, to balance and optimize system performance and an energy saving gain. In comparison with shutting down the digital channel, shutting down some analog channels for each digital channel does not reduce a quantity of digital ports visible to the base station and the terminal device, and therefore does not reduce a multiplexing capability of the base station (where the multiplexing capability of the base station is a quantity of streams that can be superimposed and transmitted by the base station in a time-frequency resource in space domain). Therefore, spectral efficiency is reduced less.

9. Antenna shutdown in a full aperture architecture:

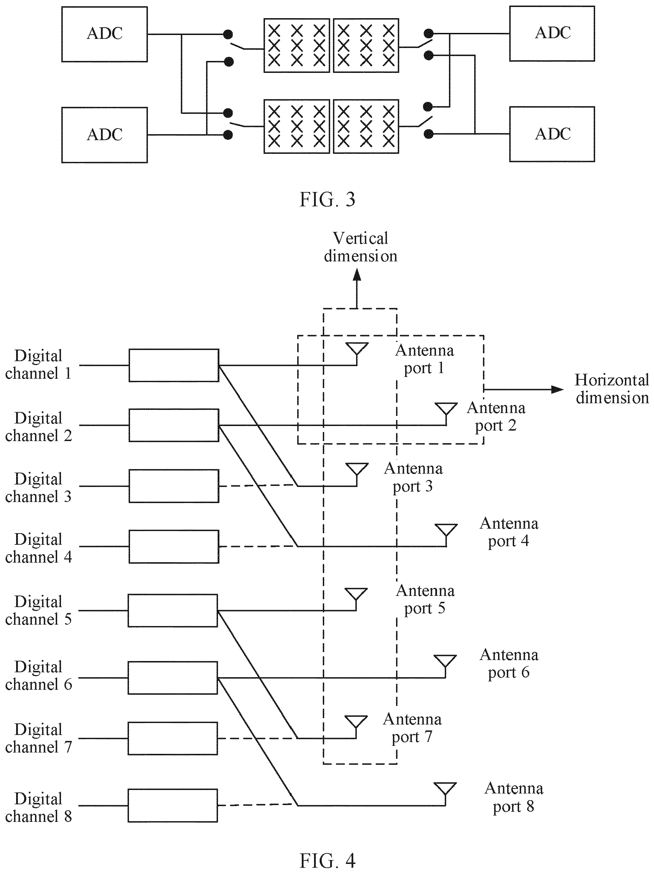

The full aperture architecture may also be referred to as a full aperture array architecture. In a low-frequency, one digital channel is associated with one analog channel, and antenna shutdown can be performed only in digital domain. However, shutting down one digital channel not only means shutting down one PA, which causes a transmit power reduction (which is an expected energy saving effect), but also means shutting down an antenna element associated with the digital channel, which causes a loss of an antenna gain (where the antenna gain is generally referred to as a beamforming gain, and when a beam is aligned with the terminal device, the beamforming gain increases as an antenna array gain increases). To reduce the loss, an antenna shutdown method in the full aperture architecture is proposed in the industry. As shown in FIG. 3, when antennas corresponding to some digital channels are shut down, the antennas corresponding to the digital channels are switched to remaining digital channels, so that a quantity of available antenna elements can be reserved to maintain a maximum antenna array gain.

For example, it is assumed that one low-frequency sending apparatus includes eight digital channels that correspond to eight antenna ports, and may include the following four modes of digital channel shutdown and antenna switching.

Mode 1: Shut down half of the channels in a vertical dimension, and switch the corresponding antennas to the remaining half of the channels in the vertical dimension, as shown in FIG. 4.

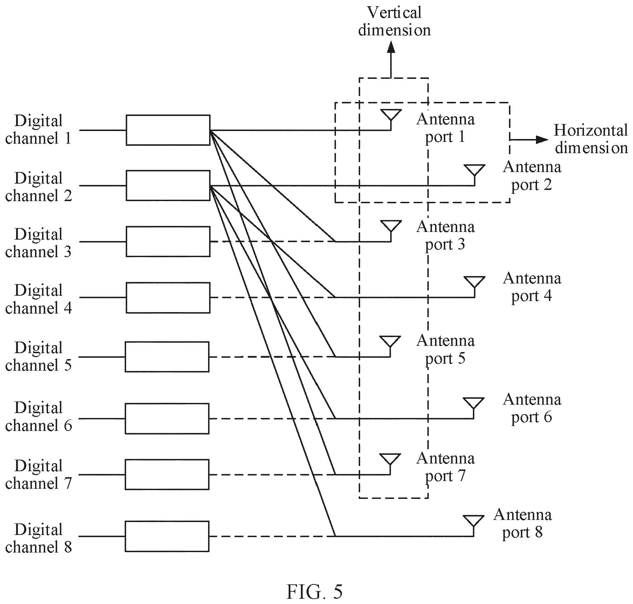

Mode 2: Shut down three-quarters of the channels in a vertical dimension, and switch the corresponding antennas to the remaining quarter of the channels in the vertical dimension, as shown in FIG. 5.

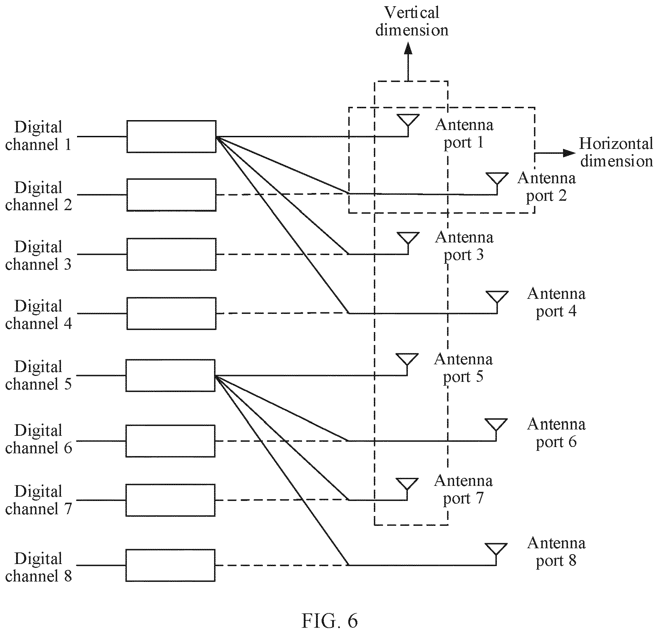

Mode 3: Shut down half of the channels in a vertical dimension and half of the channels in a horizontal dimension, and switch the corresponding antennas to the remaining quarter of the channels, as shown in FIG. 6.

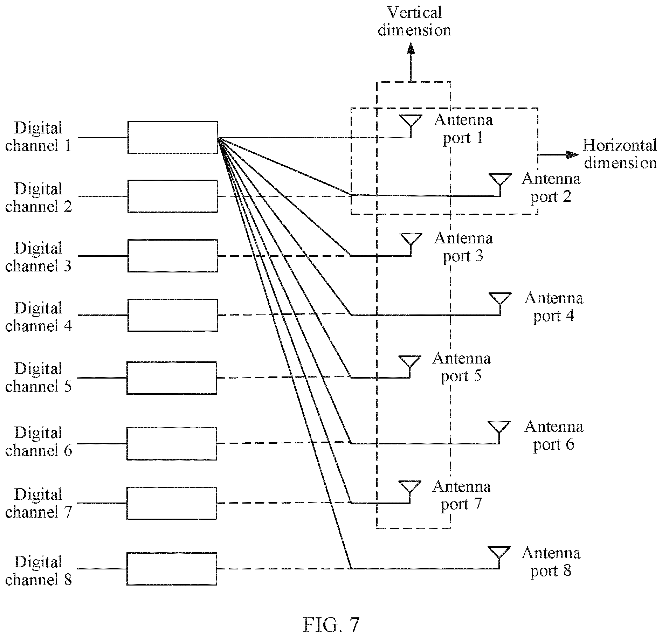

Mode 4: Shut down three-quarters of the channels in a vertical dimension and half of the channels in a horizontal dimension, and switch the corresponding antennas to the remaining one-eighth of the channels, as shown in FIG. 7.

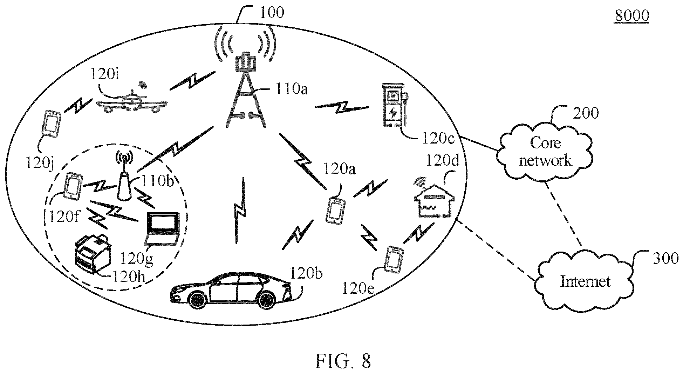

FIG. 8 is a schematic diagram of an architecture of a communication system 8000 to which an embodiment of this application is applied. As shown in FIG. 8, the communication system includes a radio access network 100 and a core network 200. Optionally, the communication system 8000 may further include the Internet 300. The radio access network 100 may include at least one radio access network device (for example, 110a and 110b in FIG. 8), and may further include at least one terminal (for example, 120a to 120j in FIG. 8). The terminal is connected to the radio access network device in a wireless manner, and the radio access network device is connected to the core network in a wireless or wired manner. A core network device and the radio access network device may be independent and different physical devices; functions of the core network device and logical functions of the radio access network device are integrated into a same physical device; or some functions of the core network device and some functions of the radio access network device are integrated into one physical device. The wired or wireless manner may be used for connection between the terminals and between the radio access network devices. FIG. 8 is only a schematic diagram. The communication system may further include another network device, for example, may further include a wireless relay device and a wireless backhaul device, which are not shown in FIG. 8.

The radio access network device may be a base station (base station), an evolved NodeB (evolved NodeB, eNodeB), a transmission reception point (transmission reception point, TRP), a next generation NodeB (next generation NodeB, gNB) in a $5^{th}$ generation ($5^{th}$ generation, 5G) mobile communication system, a next generation NodeB in a $6^{th}$ generation ($6^{th}$ generation, 6G) mobile communication system, a base station in a future mobile communication system, an access node in a Wi-Fi system, or the like; or the radio access network device may be a module or unit that completes some functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete functions of some or all of physical layers. For specific descriptions of the foregoing protocol layers, refer to related technical specifications of the $3^{rd}$ generation partnership project ($3^{rd}$ generation partnership project, 3GPP). The radio access network device may be a macro base station (for example, 110a in FIG. 8), or may be a micro base station or an indoor station (for example, 110b in FIG. 8), or may be a relay node or a donor node. A specific technology and a specific device form that are used by the radio access network device are not limited in embodiments of this application. In embodiments of this application, the radio access network device may be referred to as a network device for short, and the base station is a specific example of the network device.

The terminal may also be referred to as a terminal device, user equipment (user equipment, UE), a mobile station, a mobile terminal, or the like. The terminal may be widely applied to various scenarios such as device-to-device (device-to-device, D2D), vehicle-to-everything (vehicle-to-everything, V2X) communication, machine type communication (machine type communication, MTC), an internet of things (internet of things, IoT), virtual reality, augmented reality, industrial control, self-driving, telemedicine, a smart grid, smart furniture, smart working, smart wearing, smart transportation, and a smart city. The terminal may be a mobile phone, a tablet computer, a computer with a wireless transceiver function, a wearable device, a vehicle, an unmanned aerial vehicle, a helicopter, an airplane, a ship, a robot, a robot arm, a smart home device, or the like. A specific technology and a specific device form used by the terminal are not limited in embodiments of this application.

The base station and the terminal may be located at a fixed position, or may be mobile. The base station and the terminal may be deployed on land, including an indoor or outdoor device, a handheld device, or a vehicle-mounted device, may be deployed on water, or may be deployed on an airplane, a balloon, or a satellite in air. Application scenarios of the base station and the terminal are not limited in embodiments of this application.

Roles of the base station and the terminal may be relative. For example, the helicopter or the unmanned aerial vehicle 120i in FIG. 8 may be configured as a mobile base station. For the terminals 120j that access the radio access network 100 via 120i, the terminal 120i is a base station. However, for the base station 110a, 120i is a terminal. In other words, 110a and 120i communicate with each other by using a wireless air interface protocol. It is clear that 110a and 120i may alternatively communicate with each other by using an interface protocol between base stations. In this case, for 110a, 120i is also a base station. Therefore, both the base station and the terminal may be collectively referred to as communication apparatuses. 110a and 110b in FIG. 8 may be referred to as communication apparatuses having a base station function, and 120a to 120j in FIG. 8 may be referred to as communication apparatuses having a terminal function.

Communication between the base station and the terminal, between the base stations, and between the terminals may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be performed by using both the spectrum below 6 GHz and the spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem including the base station function. The control subsystem including the base station function herein may be a control center in the foregoing application scenarios such as the smart grid, the industrial control, the smart transportation, and the smart city. A function of the terminal may alternatively be performed by a module (for example, a chip or a modem) in the terminal, or may be performed by an apparatus including the terminal function.

In embodiments of this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

In embodiments of this application, a radio frequency unit of the base station may use an HBF architecture or a full aperture architecture. If the base station uses the HBF architecture, the radio frequency unit may perform dynamic antenna shutdown at a granularity of an analog channel. If the base station uses the full aperture architecture, the radio frequency unit may perform dynamic antenna shutdown at a granularity of a digital channel.

The following further describes in detail a channel state information feedback method and a communication apparatus that are provided in embodiments of this application.

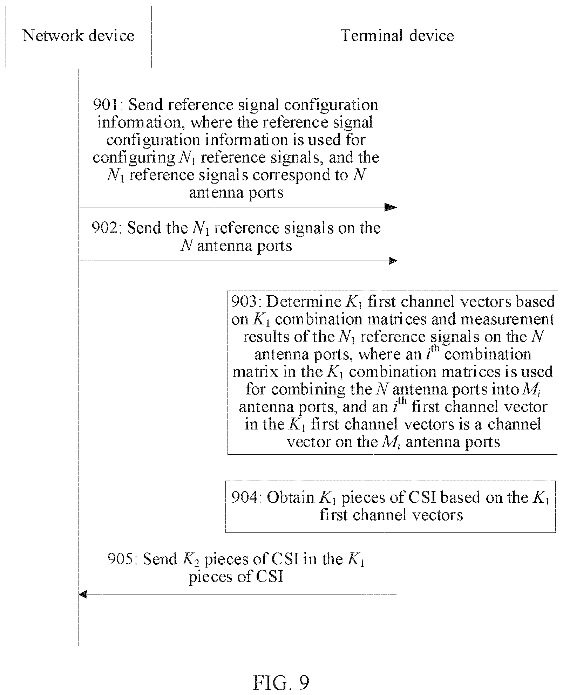

FIG. 9 is a schematic flowchart of a channel state information feedback method according to an embodiment of this application. As shown in FIG. 9, the channel state information feedback method includes the following step 901 to step 905. The method shown in FIG. 9 may be performed by a terminal device and a network device, or the method shown in FIG. 9 may be performed by a chip in the terminal device and a chip in the network device. In addition, in this embodiment of this application, measurement results of one or more reference signals on a plurality of antenna ports correspond to one channel vector, namely, a channel vector corresponding to a plurality of transmit antenna ports on one receive antenna. Alternatively, it may be extended to a scenario of a plurality of receive antennas. Each receive antenna corresponds to one channel vector, and channel vectors on all of the receive antennas are sometimes referred to as channel matrices. An example in which the method is performed by the terminal device and the network device is used for description in FIG. 9.

901: The network device sends reference signal configuration information to the terminal device, where the reference signal configuration information is used for configuring $N_1$ reference signals, $N_1$ is a positive integer, the $N_1$ reference signals correspond to $N$ antenna ports, and $N$ is an integer greater than 1. Correspondingly, the terminal device may receive the reference signal configuration information from the network device.

The reference signal may be a CSI-RS or another downlink reference signal, for example, a synchronization signal/physical broadcast channel block (synchronization signal/physical broadcast channel block, SSB). The reference signal configuration information may be in channel state information report (CSI report) configuration information. For descriptions of the CSI report configuration information, refer to the foregoing descriptions of the CSI report configuration information.

In a possible implementation, a radio frequency unit of the network device may use an HBF architecture. Analog channels associated with each digital channel are divided into one or more analog channel subarrays. One analog channel subarray includes one or more analog channels. The radio frequency unit of the network device has $N$ analog channel subarrays in total. The $N$ antenna ports are in one-to-one correspondence with the $N$ analog channel subarrays. That an analog channel subarray corresponds to an antenna port indicates that a signal on the antenna port is sent by using the analog channel subarray.

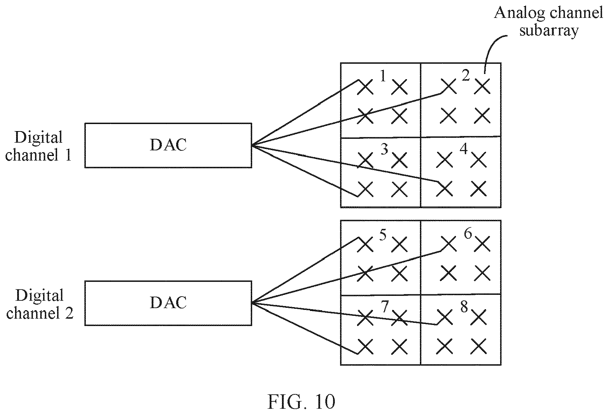

For example, as shown in FIG. 10, it is assumed that the radio frequency unit of the network device includes two digital channels. A digital channel 1 is associated with four analog channel subarrays, which are respectively an analog channel subarray 1 to an analog channel subarray 4. A digital channel 2 is associated with four analog channel subarrays, which are respectively an analog channel subarray 5 to an analog channel subarray 8. In this scenario, a plurality of antenna ports may be virtualized on one digital channel. The analog channel subarray 1 corresponds to an antenna port 1, the analog channel subarray 2 corresponds to an antenna port 2, ..., and the analog channel subarray 8 corresponds to an antenna port 8.

In a possible implementation, the $N$ antenna ports are grouped into $N_2$ antenna port groups, where $N_2$ is an integer greater than 1, different antenna port groups in the $N_2$ antenna port groups correspond to different time domain positions, each antenna port group in the $N_2$ antenna port groups includes $N_3$ antenna ports, and $N = N_2 \times N_3$.

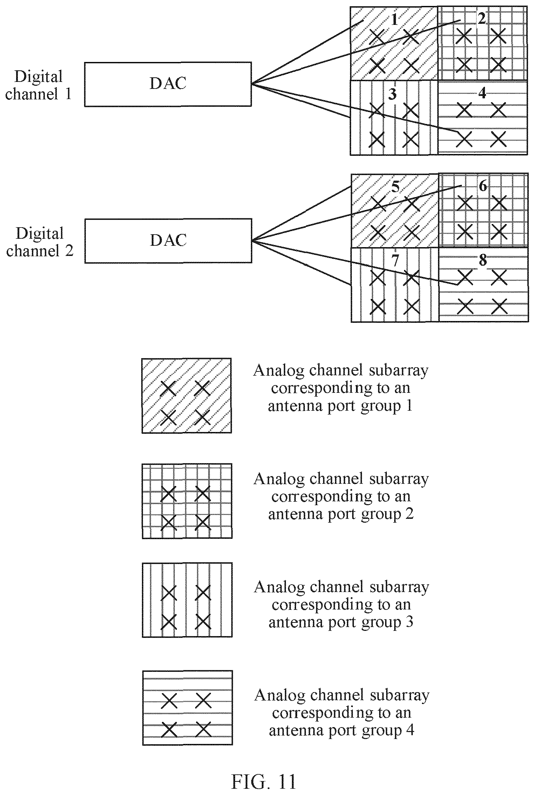

For example, as shown in FIG. 11, it is assumed that $N$ is 8, and the analog channel subarray 1 to the analog channel subarray 8 respectively correspond to the antenna port 1 to the antenna port 8. $N_2$ is 4. To be specific, $N_2$ may be equal to a quantity of analog channel subarrays associated with one digital channel. The antenna port 1 and the antenna port 5 may be grouped into an antenna port group 1. The antenna port 2 and the antenna port 6 are grouped into an antenna port group 2. The antenna port 3 and the antenna port 7 are grouped into an antenna port group 3. The antenna port 4 and the antenna port 8 are grouped into an antenna port group 4. The antenna port group 1 to the antenna port group 4 respectively correspond to different time domain positions. In other words, each digital channel is sequentially mapped to four analog channel subarrays through time division switching. Alternatively, $N_2$ may be less than a quantity of analog channel subarrays associated with one digital channel. This is not limited in this embodiment of this application. The antenna ports are grouped, and different antenna port groups correspond to different time domain positions, so that when the network device sends the reference signals on the $N$ antenna ports, analog channel subarray switching can be implemented more easily.

Optionally, there are the following three relationships between $N_2$ and $N_1$.

(1) $N_2 = N_1$. To be specific, one reference signal may correspond to one antenna port group, in other words, the reference signal may be sent on the antenna port group. For example, a CSI-RS 1 corresponds to the antenna port group 1, in other words, the CSI-RS 1 is sent on the antenna port group 1. A CSI-RS 2 corresponds to the antenna port group 2, in other words, the CSI-RS 2 is sent on the antenna port group 2. A CSI-RS 3 corresponds to the antenna port group 3, in other words, the CSI-RS 3 is sent on the antenna port group 3. A CSI-RS 4 corresponds to the antenna port group 4, in other words, the CSI-RS 4 is sent on the antenna port group 4.

(2) $N_2/N_1$ is an integer greater than 1. To be specific, one reference signal may correspond to a plurality of antenna port groups, in other words, the reference signal may be sent on the plurality of antenna port groups. For example, if $N_2$ is 4, and $N_1$ is 1, one reference signal corresponds to four antenna port groups, in other words, the reference signal is sent on the four antenna port groups. For another example, if $N_2$ is 4, and $N_1$ is 2, a reference signal 1 corresponds to the antenna port group 1 and the antenna port group 2, in other words, the reference signal 1 is sent on the antenna port group 1 and the antenna port group 2; and a reference signal 2 corresponds to the antenna port group 3 and the antenna port group 4, in other words, the reference signal 2 is sent on the antenna port group 3 and the antenna port group 4. Based on this possible implementation, the plurality of antenna port groups may correspond to one reference signal. This helps reduce reference signal overheads.

(3) $N_1/N_2$ is an integer greater than 1. To be specific, one antenna port group may correspond to a plurality of reference signals, in other words, the plurality of reference signals may be sent on the antenna port group. For example, if $N_2$ is 4, and $N_1$ is 8, the antenna port group 1 corresponds to a reference signal 1 and a reference signal 2, in other words, the reference signal 1 and the reference signal 2 are respectively sent on the antenna port 1 and the antenna port 5 in the antenna port group 1; the antenna port group 2 corresponds to a reference signal 3 and a reference signal 4, in other words, the reference signal 3 and the reference signal 4 are respectively sent on the antenna port 2 and the antenna port 6 in the antenna port group 2; the antenna port group 3 corresponds to a reference signal 5 and a reference signal 6, in other words, the reference signal 5 and the reference signal 6 are respectively sent on the antenna port 3 and the antenna port 7 in the antenna port group 3; and the antenna port group 4 corresponds to a reference signal 7 and a reference signal 8, in other words, the reference signal 7 and the reference signal 8 are respectively sent on the antenna port 4 and the antenna port 8 in the antenna port group 4.

In another possible implementation, a radio frequency unit of the network device may use a full aperture architecture. The radio frequency unit of the network device has $N$ digital channels in total. The $N$ antenna ports are in one-to-one correspondence with the $N$ digital channels. For example, it is assumed that $N$ is 8, and the digital channel 1 to the digital channel 8 in FIG. 4 to FIG. 7 respectively correspond to an antenna port 1 to an antenna port 8.

In a possible implementation, the network device may further send indication information to the terminal device, where the indication information indicates to combine the $N$ antenna ports. Correspondingly, the terminal device may receive the indication information. After receiving the indication information, the terminal device may subsequently perform port combination based on a combination matrix. Based on this possible implementation, the terminal device performs antenna port combination only when the network device indicates the terminal device to perform antenna port combination, and the terminal device does not combine the antenna ports by default. This is more flexible.

Optionally, the indication information and the reference signal configuration information may be included in a same piece of CSI report configuration information; or the indication information and the reference signal configuration information are not included in a same piece of CSI report configuration information, in other words, the indication information and the reference signal configuration information are separately sent.

902: The network device sends the $N_1$ reference signals on the $N$ antenna ports.

In this embodiment of this application, after sending the reference signal configuration information to the terminal device, the network device sends the $N_1$ reference signals on the $N$ antenna ports. Correspondingly, the terminal device may measure the $N_1$ reference signals sent on the $N$ antenna ports.

903: The terminal device determines $K_1$ first channel vectors based on $K_1$ combination matrices and measurement results of the $N_1$ reference signals on the $N$ antenna ports, where an $i^{th}$ combination matrix in the $K_1$ combination matrices is used for combining the $N$ antenna ports into $M_i$ antenna ports, an $i^{th}$ first channel vector in the $K_1$ first channel vectors is a channel vector on

the $M_i$ antenna ports, $M_i$ is less than or equal to $N$, $M_i$ is a positive integer, $K_1$ is a positive integer, and $1 \leq i \leq K_1$.

In this embodiment of this application, after receiving the reference signal configuration information from the network device, the terminal device determines the $K_1$ first channel vectors based on the $K_1$ combination matrices and the measurement results of the $N_1$ reference signals on the $N$ antenna ports. Optionally, the combination matrix may also be referred to as another name, for example, a port combination matrix, a channel combination matrix, a port mapping matrix, or a port mapping table.

In this embodiment of this application, one combination matrix may correspond to one channel shutdown pattern.

In a possible implementation, the $M_i$ antenna ports correspond to $M_i$ digital channels, the $N$ antenna ports correspond to $N$ analog channel subarrays, and $M_i$ is less than $N$.

For example, it is assumed that the radio frequency unit of the network device uses the HBF architecture. $K_1$ is 2. A combination matrix 1 corresponds to a channel shutdown pattern 1, and a combination matrix 2 corresponds to a channel shutdown pattern 2. The channel shutdown pattern 1 is used to shut down the antenna port 1 and the antenna port 5 in FIG. 11, and the channel shutdown pattern 2 is used to shut down the antenna port 1 and the antenna port 8 in FIG. 11.

The combination matrix 1 is used for combining the antenna port 2 to the antenna port 4 into an antenna port A, and is used for combining the antenna port 6 to the antenna port 8 into an antenna port B. The combined antenna port A corresponds to a digital channel 1, and the combined antenna port B corresponds to a digital channel 2. The terminal device determines a first channel vector $H_{1,1}$ on the antenna port A and the antenna port B based on the combination matrix 1 and reference signal measurement results on the antenna port 1 to the antenna port 8. The terminal device may obtain CSI in the channel shutdown pattern 1 based on the first channel vector $H_{1,1}$.

Similarly, the combination matrix 2 is used for combining the antenna port 2 to the antenna port 4 into an antenna port A, and is used for combining the antenna port 5 to the antenna port 7 into an antenna port B. The combined antenna port A corresponds to a digital channel 1, and the combined antenna port B corresponds to a digital channel 2. The terminal device determines a first channel vector $H_{1,2}$ on the antenna port A and the antenna port B based on the combination matrix 2 and reference signal measurement results on the antenna port 1 to the antenna port 8. The terminal device may obtain CSI in the channel shutdown pattern 2 based on the first channel vector $H_{1,2}$.

In a possible implementation, the $M_i$ antenna ports correspond to $M_i$ remaining activated digital channels in one digital channel shutdown pattern, the $N$ antenna ports correspond to all of the $N$ digital channels, and $M_i$ is less than $N$.

For example, it is assumed that the radio frequency unit of the network device uses the full aperture architecture. $K_1$ is 2. A combination matrix 1 corresponds to a channel shutdown pattern 3, and a combination matrix 2 corresponds to a channel shutdown pattern 4. The channel shutdown pattern 1 is the channel shutdown pattern shown in FIG. 4, and the channel shutdown pattern 2 is the channel shutdown pattern shown in FIG. 5.

The combination matrix 1 is used for combining the antenna port 1 and the antenna port 3 into an antenna port A, is used for combining the antenna port 2 and the antenna port 4 into an antenna port B, is used for combining the antenna port 5 and the antenna port 7 into an antenna port C, and is used for combining the antenna port 6 and the antenna port 8 into an antenna port D. The antenna port A corresponds to a digital channel 1, the antenna port B corresponds to a digital channel 2, the antenna port C corresponds to a digital channel 5, and the antenna port D corresponds to a digital channel 6. The terminal device determines a first channel vector $H_{1,1}$ on the antenna port A to the antenna port D based on the combination matrix 1 and reference signal measurement results on the antenna port 1 to the antenna port 8. The terminal device may obtain CSI in the channel shutdown pattern 1 based on the first channel vector $H_{1,1}$.

Similarly, the combination matrix 2 is used for combining the antenna port 1, the antenna port 3, the antenna port 5, and the antenna port 7 into an antenna port A, and the combination matrix 2 is used for combining the antenna port 2, the antenna port 4, the antenna port 6, and the antenna port 8 into an antenna port B. The antenna port A corresponds to a digital channel 1, and the antenna port B corresponds to a digital channel 2. The terminal device determines a first channel vector $H_{1,2}$ on the antenna port A and the antenna port B based on the combination matrix 2 and reference signal measurement results on the antenna port 1 to the antenna port 8. The terminal device may obtain CSI in the channel shutdown pattern 2 based on the first channel vector $H_{1,2}$.

In a possible implementation, $K_1$ pieces of CSI include CSI# $j$, the CSI# $j$ includes a precoding matrix indicator PMI, and the PMI is used for determining a precoding matrix, recommended by the terminal device, of the network device on $M_j$ antenna ports corresponding to the CSI# $j$ in the CSI# $j$.

In a possible implementation, quantities of combined antenna ports corresponding to different combination matrices may be the same or different.

For example, it is assumed that the radio frequency unit of the network device uses the HBF architecture. If $K_1$ is 2, $M_1 = M_2$.

For another example, it is assumed that the radio frequency unit of the network device may use the full aperture architecture. If $K_1$ is 2, the combination matrix 1 corresponds to the channel shutdown pattern shown in FIG. 4, and the combination matrix 2 corresponds to the channel shutdown pattern shown in FIG. 5, $M_1 \neq M_2$,

where $M_1$ = 4, and $M_2$ = 2.

For another example, it is assumed that the radio frequency unit of the network device may use the full aperture architecture. If $K_1$ is 2, the combination matrix 1 corresponds to the channel shutdown pattern shown in FIG. 5, and the combination matrix 2 corresponds to the channel shutdown pattern shown in FIG. 6, $M_1 = M_2$, where $M_1$ = 2, and $M_2$ = 2.

In a possible implementation, the $i^{th}$ combination matrix $A_i$ may be represented as: $A_i = [a_{m,n}]_{1 \leq m \leq M_i, 1 \leq n \leq N}$, where $a_{m,n}$ is an element in an $m^{th}$ row and an $n^{th}$ column of the combination matrix $A_i$. Optionally, $a_{m,n}$ represents a combination weight from an $n^{th}$ antenna port in the $N$ antenna ports to an $m^{th}$ combined port in the $M_i$ antenna ports.

Optionally, for $a_{m,n}$, there are the following several cases.

(1) $a_{m,n}$ is 1 or 0. If $a_{m,n}$ is 0, it indicates that the $n^{th}$ antenna port does not participate in combination; or if $a_{m,n}$ is 1, it indicates that the $n^{th}$ antenna port participates in combination.

For example, it is assumed that $N$ = 8 and $M_i$ = 2. With reference to FIG. 11, $A_i = \begin{bmatrix} 1 & 0 & 0 & 0 & 0 & 0 & 0 & 0 \\ 0 & 0 & 0 & 0 & 1 & 0 & 0 & 0 \end{bmatrix}$ and it indicates that the terminal device considers that only the antenna port 1 and the antenna port 5 finally send data, and CSI of the two antenna ports needs to be measured. In other words, in the HBF architecture shown in FIG. 11, only the $1^{st}$ analog channel subarray is reserved for each digital channel, and other analog channel subarrays are shut down.

For another example, it is assumed that $N$ = 8 and $M_i$ = 2. With reference to FIG. 11, $A_i = \begin{bmatrix} 1 & 1 & 0 & 0 & 0 & 0 & 0 & 0 \\ 0 & 0 & 0 & 0 & 1 & 1 & 0 & 0 \end{bmatrix}$, and it indicates that the $1^{st}$ antenna port and the $2^{nd}$ antenna port are combined into one antenna port, and the $5^{th}$ antenna port and the $6^{th}$ antenna port are combined into one antenna port. The network device sends data through the two combined antenna ports. Therefore, the terminal device needs to measure CSI of the two combined antenna ports. In other words, in the HBF architecture shown in FIG. 11, only the $1^{st}$ analog channel subarray and the $2^{nd}$ analog channel subarray that correspond to each digital channel are reserved for the digital channel, and other analog channel subarrays are closed.

For another example, it is assumed that $N$ = 8 and $M_i$ = 2. With reference to FIG. 11, $A_i = \begin{bmatrix} 1 & 0 & 1 & 0 & 0 & 0 & 0 & 0 \\ 0 & 0 & 0 & 0 & 1 & 0 & 1 & 0 \end{bmatrix}$, and it indicates that the $1^{st}$ antenna port and the $3^{rd}$ antenna port are combined into one antenna port, and the $5^{th}$ antenna port and the $7^{th}$ antenna port are combined into one antenna port. The network device sends data through the two combined antenna ports. Therefore, the terminal device needs to measure CSI of the two combined antenna ports. In other words, in the HBF architecture shown in FIG. 11, only the $1^{st}$ analog channel subarray and the $3^{rd}$ analog channel subarray that correspond to each digital channel are reserved for the digital channel, and other analog channel subarrays are closed.

For another example, it is assumed that $N$ = 8 and $M_i$ = 2. With reference to FIG. 11, $A_i = \begin{bmatrix} 1 & 1 & 1 & 0 & 0 & 0 & 0 & 0 \\ 0 & 0 & 0 & 0 & 1 & 1 & 1 & 0 \end{bmatrix}$ and it indicates that the $1^{st}$ antenna port, the $2^{nd}$ antenna port, and the $3^{rd}$ antenna port are combined into one antenna port, and the $5^{th}$ antenna port, the $6^{th}$ antenna port, and the $7^{th}$ antenna port are combined into one antenna port. The network device sends data through the two combined antenna ports. Therefore, the terminal device needs to measure CSI of the two combined antenna ports. In other words, in the HBF architecture shown in FIG. 11, only the $1^{st}$ analog channel sub array, the $2^{nd}$ analog channel sub array, and the $3^{rd}$ analog channel subarray that correspond to each digital channel are reserved for the digital channel, and the $4^{th}$ analog channel subarray is closed.

For another example, it is assumed that $N$ = 8 and $M_i$ = 2. With reference to FIG. 11, $A_i = \begin{bmatrix} 1 & 1 & 1 & 1 & 0 & 0 & 0 & 0 \\ 0 & 0 & 0 & 0 & 1 & 1 & 1 & 1 \end{bmatrix}$ and it indicates that the $1^{st}$ antenna port, the $2^{nd}$ antenna port, the $3^{rd}$ antenna port, and the $4^{th}$ antenna port are combined into one antenna port, and the $5^{th}$ antenna port, the $6^{th}$ antenna port, the $7^{th}$ antenna port, and the $8^{th}$ antenna port are combined into one antenna port. The network device sends data through the two combined antenna ports. Therefore, the terminal device needs to measure CSI of the two combined antenna ports. In other words, in the HBF architecture shown in FIG. 11, no analog channel subarrays are closed for each digital channel.

(2) $a_{m,n}$ is 0 or $a_m$. $a_m$ is protocol-predefined, or $a_m$ is configured for the terminal device by using signaling after being determined by the network device. For example, $\alpha_m = \dfrac{1}{\sqrt{\sum_{n=0}^{N} \alpha_{m,n}}}$. If $a_{m,n}$ is 0, it indicates that the $n^{th}$ antenna port does not participate in combination; or if $a_{m,n}$ is $a_m$, it indicates that the $n^{th}$ antenna port participates in combination, and a total transmit power of antenna ports participating in combination is normalized.

In a possible implementation, $a_{m,n1}$ and $a_{m,n2}$ exist in $A_i$, $a_{m,n1}$ > 0, $a_{m,n2}$ > 0, and $n1$ is not equal to $n2$. In other words, one combined antenna port needs to be obtained by combining at least two antenna ports in the $N$ antenna ports.

For example, $A_i = \begin{bmatrix} 1 & 1 & 0 & 0 & 0 & 0 & 0 & 0 \\ 0 & 0 & 0 & 0 & 1 & 1 & 0 & 0 \end{bmatrix}$ and it indicates that the 1st antenna port and the 2nd antenna port are combined into an antenna port A, and the 5th antenna port and the 6th antenna port are combined into an antenna port B. That is, the antenna port A is obtained by combining two antenna ports, and the antenna port B is obtained by combining two antenna ports.

In a possible implementation, for $n \notin S_m$, $a_{m,n}$=0, where $S_m$ is a pre-combination port set corresponding to an $m^{th}$ combined port, an intersection set of $S_{m1}$ and $S_{m2}$ is an empty set, and $m_1$ and $m_2$ are sequence numbers of any two different combined ports. In other words, different combined antenna ports are obtained by combining different antenna ports in the $N$ antenna ports.

For example, $A_i = \begin{bmatrix} 1 & 1 & 0 & 0 & 0 & 0 & 0 & 0 \\ 0 & 0 & 0 & 0 & 1 & 1 & 0 & 0 \end{bmatrix}$, and it indicates that the 1st antenna port and the 2nd antenna port are combined into an antenna port A, and the 5th antenna port and the 6th antenna port are combined into an antenna port B. That is, the antenna port A and the antenna port B are obtained by combining different antenna ports.

In a possible implementation, it is assumed that the $N$ ports form an all-1 vector $x = [1,1, \dots ,1]^T$ whose length is $N$. The $M_i$ combined antenna ports may be represented as a vector $Y = [y_1, y_2, \dots , y_{M_i}]^T = A_i x$.

In a possible implementation, that the $i^{th}$ combination matrix is used for combining the N antenna ports into the $M_i$ antenna ports means that the $i^{th}$ combination matrix is used for combining second channel vectors into the first channel vector on the $M_i$ antenna ports, and the second channel vectors are channel vectors that are on the $N$ antenna ports and that are obtained based on the measurement results on the $N$ antenna ports. Based on this possible implementation, one combination matrix may be used for obtaining a channel vector in one channel shutdown pattern.

For example, assuming that the terminal device has only one receive port, the second channel vector on the $N$ antenna ports may be represented as a channel vector $H_2 = [h_1, \dots , h_N]^T$ whose length is $N$, where $h_n$ represents a channel gain on the $n^{th}$ antenna port, and may be a complex number, and $1 \leq n \leq N$. Optionally, the terminal device sorts the $N$ antenna ports according to a preset rule, to obtain $H_2 = [h_1, \dots , h_N]^T$.

In a possible implementation, the second channel vector is $H_2$, the $i^{th}$ combination matrix is $A_i$, the $i^{th}$ first channel vector is $H_{1,i}$, and $H_{1,i} = A_i \times H_2$. Based on this possible implementation, a channel vector in a channel shutdown pattern corresponding to a combination matrix can be accurately obtained.

In a possible implementation, the combination matrix may further be represented in another method.

For example, the reference signal configuration information may carry grouping information of the $N$ antenna ports. For example, the $N$ antenna ports are grouped into $L$ groups. Optionally, one antenna port belongs to a maximum of one group. The combination matrix may be represented as a combination of $L$ combination patterns. An $l^{th}$ combination pattern is a combination vector, and is used for combining an $l^{th}$ group of antenna ports into one antenna port. In this way, a quantity of finally combined antenna ports is fixed to $L$. In comparison with the foregoing general combination matrix, each combined antenna port herein can be obtained by combining only a corresponding group of antenna ports.

For example, an antenna port 1 to an antenna port 4 corresponding to an analog channel 1 to an analog channel 4 in FIG. 10 may be grouped into an antenna port group 1, and an antenna port 5 to an antenna port 8 corresponding to an analog channel 5 to an analog channel 8 may be grouped into an antenna port group 2. The combination matrix may be represented as a combination of two combination patterns. The 1st combination pattern is used for combining the antenna port group 1 into one antenna port. For example, the 1st combination pattern is $P_1 = [1110]$, and it indicates that the antenna port 1 to the antenna port 3 are combined into one antenna port. The 2nd combination pattern is used for combining the antenna port group 2 into one antenna port. For example, the 2nd combination pattern is $P_2 = [1110]$, and it indicates that the antenna port 5 to the antenna port 7 are combined into one antenna port.

In a possible implementation, the network device may further send first indication information to the terminal device, where the first indication information indicates the $K_1$ combination matrices. Correspondingly, the terminal device may further receive the first indication information. In this possible implementation, the $K_1$ combination matrices are not fixed, and may be indicated by the network device. In this way, the terminal device can more flexibly determine CSI in different channel shutdown patterns. Alternatively, the $K_1$ combination matrices may be protocol pre-specified, and do not need to be indicated by the network device.

Optionally, the first indication information may be in medium access control-control element (medium access control-control element, MAC-CE) signaling or downlink control information (downlink control information, DCI) signaling. Alternatively, the first indication information may be in the CSI report configuration information.

Optionally, the $K_1$ combination matrices are a subset of $K$ combination matrices, and the first indication information indicates sequence numbers of the $K_1$ combination matrices in a set including the $K$ combination matrices, where the $K$ combination matrices are protocol-predefined or indicated by the network device by using second indication information, and $K$ is an integer greater than or equal to $K_1$.

In this optional manner, the network device may indicate a plurality of combination matrices to the terminal device in advance, and subsequently flexibly indicate, by using the first indication information and as required, a combination matrix to be used by the terminal device. Therefore, in this optional manner, the first indication information may be in the MAC-CE signaling or the DCI signaling. In this way, flexibility of indicating the combination matrix by the network device can also be improved.

Optionally, the reference signal configuration information and the second indication information may be simultaneously sent. For example, both the reference signal configuration information and the second indication information are included in the CSI report configuration information. For example, one piece of CSI report configuration information includes the reference signal configuration information and the second indication information. The second indication information is used for configuring $K$ = 10 combination matrices. The network device may indicate sequence numbers of four combination matrices to the terminal device by using one piece of MAC-CE signaling or one piece of DCI signaling. The terminal device selects $K_1$ = 4 combination matrices from the $K$ = 10 combination matrices to calculate CSI, and reports the CSI.

Optionally, if the reference signal configuration information is used for configuring one reference signal, that is, $N_1$ = 1, the second indication information may be in the reference signal configuration information.

Alternatively, the second indication information may be included in information other than the CSI report configuration information and sent to the terminal device. This is not limited in this embodiment of this application.

904: The terminal device obtains the $K_1$ pieces of CSI based on the $K_1$ first channel vectors.

The CSI may include one or more of a CRI, an SSBRI, an RI, a PMI, a CQI, an LI, an L1-RSRP, and an L1-SINR. For descriptions of the CRI, the SSBRI, the RI, the PMI, the CQI, and the LI, refer to the foregoing related descriptions. Details are not described herein again. In this embodiment of this application, the terminal device may perform one-shot measurement or smooth measurement on the reference signal to obtain the $K_1$ pieces of CSI. For descriptions of one-shot measurement or smooth measurement, refer to the foregoing related descriptions. Details are not described herein again.

905: The terminal device sends $K_2$ pieces of CSI in the $K_1$ pieces of CSI to the network device, where $K_2$ is a positive integer less than or equal to $K_1$. Correspondingly, the network device may receive the $K_2$ pieces of CSI in the $K_1$ pieces of CSI from the terminal device.

For example, the terminal device determines five first channel vectors based on five combination matrices, and determines five pieces of CSI based on the five first channel vectors. The terminal device may send the five pieces of CSI to the network device, or may send some of the five pieces of CSI to the network device.

In a possible implementation, $K_2$ is equal to $K_1$.

To be specific, the terminal device reports all of the CSI determined by the terminal device.

In a possible implementation, $K_2$ is less than $K_1$, and for the $K_2$ pieces of CSI, there are the following several cases.

(1) The $K_2$ pieces of CSI are $K_2$ pieces of CSI with a maximum utility function in the $K_1$ pieces of CSI, and $K_2$ is a positive integer.

Optionally, the network device may specify $K_2$ for the terminal device. In other words, the network device may specify, for the terminal device, a quantity of pieces of CSI to be reported, or $K_2$ may be protocol pre-specified.

The terminal device may map each piece of CSI to a utility function U according to a specific rule, and select the $K_2$ pieces of CSI with the maximum utility function to report the CSI to the network device. Specifically, correspondence between the CSI and the utility function U may be protocol-predefined, indicated by the network device, or implemented by the terminal device.

Optionally, in an implementation method, the utility function U is spectral efficiency that can be obtained based on a given bit error rate, and is related to an RI and a CQI in the CSI. For example, U=RI*f(CQI), where f(CQI) represents single-stream transmission spectral efficiency corresponding to the CQI.

(2) The $K_2$ pieces of CSI are one or more pieces of CSI with a utility function whose fallback value is less than or equal to a first threshold in the $K_1$ pieces of CSI, where a fallback value of a utility function of first CSI is a ratio of a utility function of second CSI to the utility function of the first CSI, and the second CSI is CSI with a maximum utility function in the $K_1$ pieces of CSI.

For example, there are five pieces of CSI with a utility function whose fallback value is less than or equal to the first threshold in the $K_1$ pieces of CSI, and the terminal device may report the five pieces of CSI to the network device, or report some of the five pieces of CSI to the network device.

Optionally, the utility function of the CSI is related to an RI and a CQI in the CSI.

Optionally, $K_2$ may be determined by the terminal device, and the terminal device may report $K_2$ to the network device by using separate information, or $K_2$ may be protocol pre-specified.

Optionally, the first threshold may be indicated by the network device to the terminal device, or the first threshold may be protocol pre-specified.

(3) The $K_2$ pieces of CSI are CSI with a minimum utility function in CSI with a utility function whose fallback value is less than or equal to a first threshold in the $K_1$ pieces of CSI, where a fallback value of a utility function of first CSI is a ratio of a utility function of second CSI to the utility function of the first CSI, and the second CSI is CSI with a maximum utility function in the $K_1$ pieces of CSI.

Optionally, $K_2$ is equal to 1.

Optionally, the utility function of the CSI is related to an RI and a CQI in the CSI.

Optionally, the first threshold may be indicated by the network device to the terminal device, or the first threshold may be protocol pre-specified.

(4) The $K_2$ pieces of CSI are CSI with a maximum utility function in CSI with a utility function whose fallback value is greater than or equal to a second threshold in the $K_1$ pieces of CSI, where a fallback value of a utility function of first CSI is a ratio of a utility function of second CSI to the utility function of the first CSI, and the second CSI is CSI with a maximum utility function in the $K_1$ pieces of CSI.

Optionally, $K_2$ is equal to 1.

Optionally, the utility function of the CSI is related to an RI and a CQI in the CSI.

Optionally, the second threshold may be indicated by the network device to the terminal device, or the second threshold may be protocol pre-specified. Optionally, in (1) to (4), the terminal device may further report numbers of combination matrices corresponding to the $K_2$ pieces of CSI, so that the network device can know that the reported CSI is CSI in which channel shutdown pattern.

Based on the implementations in (1) to (4), CSI reporting overheads can be reduced.

In a possible implementation, when reporting the $K_2$ pieces of CSI to the network device, the terminal device may differentially report some feedback amounts in the $K_2$ pieces of CSI. For example, the CQIs in the CSI may be differentially reported. To be specific, a CQI in the 1st piece of CSI (or CSI with a maximum utility function) is first reported, and then a difference between a CQI in the second piece of CSI (or CSI with the second largest utility function) and the CQI of the previous CSI is reported, and so on.

It can be learned that, in the method described in FIG. 9, in the HBF architecture, the $N$ antenna ports may correspond to the $N$ analog channel subarrays. One digital channel corresponds to a plurality of analog channel subarrays, and one digital channel corresponds to one antenna port. One combination matrix is used for combining the $N$ analog channel subarrays into a plurality of digital channels. Therefore, one combination matrix is in one-to-one correspondence with one analog channel shutdown pattern. CSI corresponding to a plurality of digital channels in an analog channel shutdown pattern may be obtained based on a combination matrix corresponding to the analog channel shutdown pattern and measurement results on all of the analog channel subarrays. It can be learned that, according to the method described in FIG. 9, the network device does not need to send a downlink reference signal in each analog channel shutdown pattern, but needs to send only one common downlink reference signal, and the terminal device can obtain more pieces of CSI in the analog channel shutdown pattern based on limited pilot overheads. In the full aperture architecture, the $N$ antenna ports may correspond to the $N$ digital channels. After some digital channels are closed, corresponding antenna elements may be switched to remaining digital channels, so that a quantity of available antenna elements can be reserved to maintain a maximum antenna array gain. One combination matrix is used for combining the $N$ digital channels. To be specific, the some digital channels are shut down and the corresponding antenna elements are switched to the remaining digital channels. Therefore, one combination matrix is in one-to-one correspondence with one digital channel shutdown pattern. CSI in a digital channel shutdown pattern may be obtained based on a combination matrix corresponding to the digital channel shutdown pattern and measurement results on all of the digital channels. It can be learned that, according to the method described in FIG. 9, the network device does not need to send a downlink reference signal in each digital channel shutdown pattern, but needs to send only one common downlink reference signal, and the terminal device can obtain more pieces of CSI in the digital channel shutdown pattern based on limited pilot overheads.

The following further describes, based on two specific examples, the method described in FIG. 9.

**Example 1: Dynamic channel shutdown at a granularity of an analog channel in an HBF architecture**

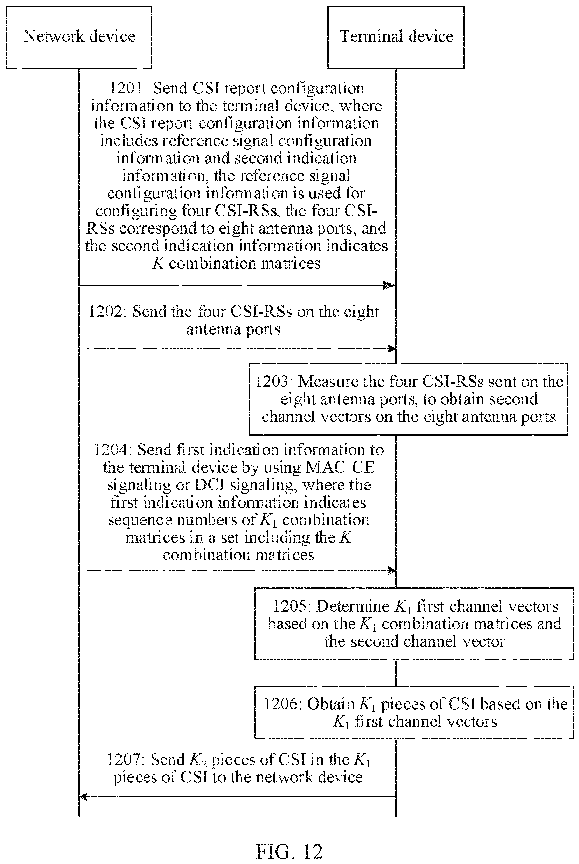

FIG. 12 is a schematic flowchart of another channel state information feedback method according to an embodiment of this application. As shown in FIG. 12, the channel state information feedback method includes the following step 1201 to step 1207.

1201: A network device sends CSI report configuration information to a terminal device, where the CSI report configuration information includes reference signal configuration information and second indication information, the reference signal configuration information is used for configuring four CSI-RSs, the four CSI-RSs correspond to eight antenna ports, and the second indication information indicates $K$ combination matrices.

As shown in FIG. 11, it is assumed that a radio frequency unit of the network device includes two digital channels, and analog channels associated with each digital channel are divided into four time-domain non-overlapping subarrays. There are the following 15 types of analog channel shutdown patterns corresponding to a single digital channel: {0001, 0010, 0100, 1000, 0011, 0101, 0110, 1001, 1010, 1100, 0111, 1110, 1111}, where 1 indicates that a corresponding subarray is open, and 0 indicates that a corresponding subarray is closed.

An antenna port 1 to an antenna port 8 respectively correspond to the analog channel subarray 1 to the analog channel subarray 8 in FIG. 11. The eight antenna ports are grouped into four antenna port groups, each antenna port group includes two antenna ports, and each antenna port group corresponds to one CSI-RS. Different antenna port groups correspond to different time domain positions. An antenna port group 1 includes the antenna port 1 and the antenna port 5. An antenna port group 2 includes the antenna port 2 and the antenna port 6. An antenna port group 3 includes the antenna port 3 and the antenna port 7. An antenna port group 4 includes the antenna port 4 and the antenna port 8.

Optionally, the reference signal configuration information may alternatively be used for configuring only one CSI-RS, which corresponds to eight antenna ports. In this example, an example in which the reference signal configuration information is used for configuring four CSI-RSs is used for description.

For a set of combination matrices, there are the following two cases.

Case 1: Assuming that combination manners of digital ports are the same, there are 15 sets of combination matrices, which respectively correspond to the foregoing analog channel shutdown patterns.

Case 2: If different digital ports may have different combination manners, there are 15^2 sets of combination matrices.

Optionally, $K$ is selected from the sets of combination matrices. For example, for the case 1, the $K$ combination matrices are all of combination matrices, or the $K$ combination matrices are some of the 15 combination matrices, for example, a combination matrix corresponding to {0001, 0010, 0011, 1100, 0111, 1110, 1111}.

1202: The network device sends the four CSI-RSs on the eight antenna ports.

1203: The terminal device measures the four reference signals sent on the eight antenna ports, to obtain second channel vectors on the eight antenna ports.

1204: The network device sends first indication information to the terminal device by using MAC-CE signaling or DCI signaling, where the first indication information indicates sequence numbers of $K_1$ combination matrices in a set including the $K$ combination matrices.

$K_1$ may be equal to $K$, or $K_1$ may be less than $K$.

1205: The terminal device determines $K_1$ first channel vectors based on the $K_1$ combination matrices and the second channel vector.

Alternatively, the network device may not send the first indication information, and the terminal device calculates and reports $K$ pieces of CSI based on the $K$ combination matrices and the second channel vector by default, that is, $K = K_1$.

Alternatively, the network device may not send the first indication information, and the terminal device selects the $K_1$ combination matrices from the $K$ combination matrices to calculate and report CSI. In this example, an example in which the network device sends the first indication information is used for description.

It is assumed that $K_1$ is 2. The terminal device determines, based on the 1st combination matrix

$$A_1 = \begin{bmatrix} 1 & 0 & 1 & 0 & 0 & 0 & 0 & 0 \\ 0 & 0 & 0 & 0 & 1 & 0 & 1 & 0 \end{bmatrix}$$ and the second channel vector $H_2$, that the first channel vector is $H_{1,1} = A_1 \times H_2$. $A_1$ indicates that the antenna port 1 and the antenna port 3 are combined into an antenna port A, and the antenna port 5 and the antenna port 7 are combined into an antenna port B. The network device sends data through the two combined antenna ports. Therefore, the terminal device needs to measure CSI of the two combined antenna ports. In other words, in the HBF architecture shown in FIG. 11, only the 1st analog channel subarray and the 3rd analog channel subarray are reserved for each digital channel, and other analog channel subarrays are closed.

The terminal device determines, based on the

$$2\text{nd combination matrix } A_2 = \begin{bmatrix} 1 & 1 & 1 & 0 & 0 & 0 & 0 & 0 \\ 0 & 0 & 0 & 0 & 1 & 1 & 1 & 0 \end{bmatrix}$$ and

the second channel vector $H_2$, that the first channel vector is $H_{1,2} = A_2 \times H_2$. $A_2$ indicates that the 1st antenna port, the 2nd antenna port, and the 3rd antenna port are combined into one antenna port, and the 5th antenna port, the 6th antenna port, and the 7th antenna port are combined into one antenna port. The network device sends data through the two combined antenna ports. Therefore, the terminal device needs to measure CSI of the two combined antenna ports. In other words, in the HBF architecture shown in FIG. 11, only the 1st analog channel subarray, the 2nd analog channel subarray, and the 3rd analog channel subarray are reserved for each digital channel, and the 4th analog channel subarray is closed.

1206: The terminal device obtains $K_1$ pieces of CSI based on the $K_1$ first channel vectors.

1207: The terminal device sends $K_2$ pieces of CSI in the $K_1$ pieces of CSI to the network device, where $K_2$ is a positive integer less than or equal to $K_1$. Correspondingly, the network device may receive the $K_2$ pieces of channel state information CSI in the $K_1$ pieces of CSI from the terminal device.

Optionally, $K_2 = K_1$.

Optionally, $K_2 < K_1$, and the terminal device calculates a corresponding spectral effect $SE_i = RI_i \times R_t \times Q_i$ for CSI corresponding to the $K_1$ combination matrices, where $RI_i$ is an RI in CSI corresponding to an $i$th combination matrix, and $R_i$ and $Q_i$ are respectively a code rate and a modulation order that correspond to a CQI in the CSI corresponding to the $i$th combination matrix. For the $K_2$ pieces of CSI, there are the following several cases.

(1) The $K_2$ pieces of CSI are $K_2$ pieces of CSI with a maximum utility function in the $K_1$ pieces of CSI. The terminal device further indicates, to the network device, a number of a combination matrix corresponding to reported CSI, so that the network device can know that the reported CSI is CSI in which channel shutdown pattern.

(2) The terminal device determines a maximum utility function $SE_{max}$, and calculates a fallback value $\beta_i = SE_{max}/SE_i$ of a utility function of each piece of CSI. The terminal device finds one or more pieces of CSI that meets $\beta_i \leq \beta_{th1}$, and reports the one or more pieces of CSI to the network device. $\beta_{th1}$ is a preset

threshold, and may be configured by the network device in a CSI report. The terminal device further indicates, to the network device, a number of a combination matrix corresponding to the reported CSI, so that the network device can know that the reported CSI is CSI in which channel shutdown pattern.

(3) The terminal device determines a maximum utility function $SE_{max}$, calculates a fallback value $\beta_i = SE_{max}/SE_i$ of a utility function of each piece of CSI, finds CSI with a minimum utility function in CSI that meets $\beta_i \leq \beta_{th1}$, and reports the CSI to the network device. $\beta_{th1}$ is a preset threshold, and may be configured by the network device in a CSI report. The terminal device further indicates, to the network device, a number of a combination matrix corresponding to the reported CSI, so that the network device can know that the reported CSI is CSI in which channel shutdown pattern.

(4) The terminal device determines a maximum utility function $SE_{max}$, calculates a fallback value $\beta_i = SE_{max}/SE_i$ of a utility function of each piece of CSI, finds CSI with a maximum utility function in CSI that meets $\beta_i \geq \beta_{th2}$, and reports the CSI to the network device. $\beta_{th2}$ is a preset threshold, and may be configured by the network device in a CSI report. The terminal device further indicates, to the network device, a number of a combination matrix corresponding to the reported CSI, so that the network device can know that the reported CSI is CSI in which channel shutdown pattern.

**Example 2: Dynamic channel shutdown at a granularity of a digital channel in a full aperture architecture**

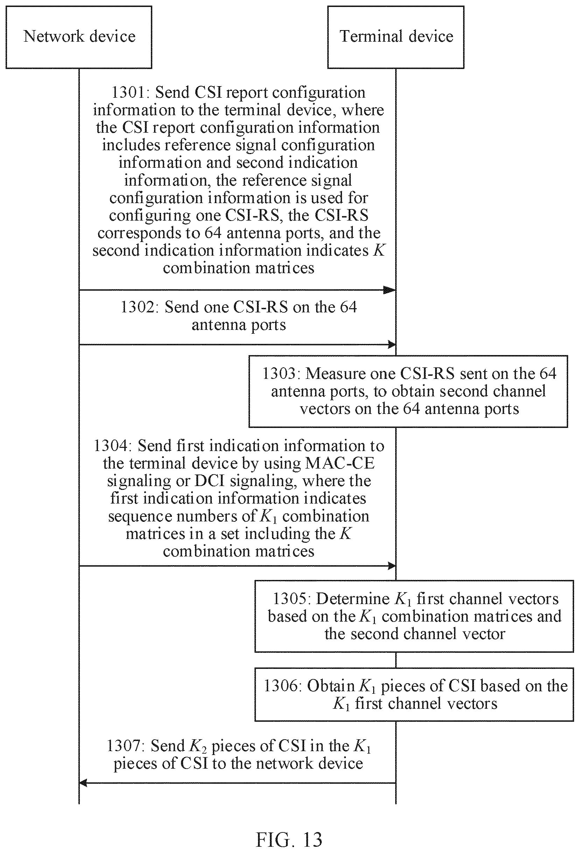

FIG. 13 is a schematic flowchart of still another channel state information feedback method according to an embodiment of this application. As shown in FIG. 13, the channel state information feedback method includes the following step 1301 to step 1307.

1301: A network device sends CSI report configuration information to a terminal device, where the CSI report configuration information includes reference signal configuration information and second indication information, the reference signal configuration information is used for configuring one CSI-RS, the CSI-RS corresponds to 64 antenna ports, and the second indication information indicates $K$ combination matrices.

The reference signal configuration information may alternatively be used for configuring a plurality of CSI-RSs. In this example, an example in which the reference signal configuration information is used for configuring one CSI-RS is used. Each digital channel is in one-to-one correspondence with an antenna port.

1302: The network device sends one CSI-RS on the 64 antenna ports.

1303: The terminal device measures one reference signal sent on the 64 antenna ports, to obtain second channel vectors on the 64 antenna ports.

1304: The network device sends first indication information to the terminal device by using MAC-CE signaling or DCI signaling, where the first indication information indicates sequence numbers of $K_1$ combination matrices in a set including the $K$ combination matrices.

1305: The terminal device determines $K_1$ first channel vectors based on the $K_1$ combination matrices and the second channel vector.

Assuming that $K_1$ is 4, the terminal device determines four first channel vectors based on a combination matrix 1 to a combination matrix 4 and the second channel vector. The combination matrix 1 corresponds to the mode 1 of digital channel shutdown and antenna switching shown in FIG. 4. The combination matrix 2 corresponds to the mode 2 of digital channel shutdown and antenna switching shown in FIG. 5. The combination matrix 3 corresponds to the mode 3 of digital channel shutdown and antenna switching shown in FIG. 6. The combination matrix 4 corresponds to the mode 4 of digital channel shutdown and antenna switching shown in FIG. 7. The terminal device can determine, based on the four first channel vectors, CSI in the four modes of digital channel shutdown and antenna switching.

Each combination matrix in the $K$ combination matrices is divided into eight submatrices. Each submatrix is responsible for performing channel shutdown and antenna combination on a subarray including four adjacent channels in a V dimension and two adjacent channels in an H dimension. Eight subarrays in charge of the eight submatrices do not overlap, and correspond to 64 digital channels in total.

Each submatrix in the combination matrix 1 is

$$A_{1i} = \begin{bmatrix} 1 & 0 & 1 & 0 & 0 & 0 & 0 & 0 \\ 0 & 1 & 0 & 1 & 0 & 0 & 0 & 0 \\ 0 & 0 & 0 & 0 & 1 & 0 & 1 & 0 \\ 0 & 0 & 0 & 0 & 0 & 1 & 0 & 1 \end{bmatrix}$$

. An antenna port 1 to an antenna port 8 respectively correspond to the digital channel 1 to the digital channel 8 in FIG. 4. The submatrix $A_{1i}$ indicates that the antenna port 1 and the antenna port 3 are combined into one antenna port, the antenna port 2 and the antenna port 4 are combined into one antenna port, the antenna port 5 and the antenna port 7 are combined into one antenna port, and the antenna port 6 and the antenna port 8 are combined into one antenna port.

Each submatrix in the combination matrix 2 is

$$A_{2i} = \begin{bmatrix} 1 & 0 & 1 & 0 & 1 & 0 & 1 & 0 \\ 0 & 1 & 0 & 1 & 0 & 1 & 0 & 1 \end{bmatrix}$$

. An antenna port 1 to an antenna port 8 respectively correspond to the digital channel 1 to the digital channel 8 in FIG. 5. The submatrix $A_{2i}$ indicates that the antenna port 1, the antenna port 3, the antenna port 5, and the antenna port 7 are combined into one antenna port, and the antenna port 2, the antenna port 4, the antenna port 6, and the antenna port 8 are combined into one antenna port.

Each submatrix in the combination matrix 3 is

$$A_{3i} = \begin{bmatrix} 1 & 1 & 1 & 1 & 0 & 0 & 0 & 0 \\ 0 & 0 & 0 & 0 & 1 & 1 & 1 & 1 \end{bmatrix}$$

. An antenna port 1 to an antenna port 8 respectively correspond to the digital channel 1 to the digital channel 8 in FIG. 6. The submatrix $A_{3i}$ indicates that the antenna port 1 to the antenna port 4 are combined into one antenna port, and the antenna port 5 to the antenna port 8 are combined into one antenna port.

Each submatrix in the combination matrix 4 is $A_{4i}$ = [1 1 1 1 1 1 1 1]. An antenna port 1 to an antenna port 8 respectively correspond to the digital channel 1 to the digital channel 8 in FIG. 7. The submatrix $A_{4i}$ indicates that the antenna port 1 to the antenna port 8 are combined into one antenna port.

1306: The terminal device obtains $K_1$ pieces of CSI based on the $K_1$ first channel vectors.

1307: The terminal device sends $K_2$ pieces of CSI in the $K_1$ pieces of CSI to the network device, where $K_2$ is a positive integer less than or equal to $K_1$. Correspondingly, the network device may receive the $K_2$ pieces of channel state information CSI in the $K_1$ pieces of CSI from the terminal device.

For descriptions of $K_1$ and $K_2$ in Example 2, refer to the descriptions in Example 1. Details are not described herein again.

It may be understood that, to implement the functions in the foregoing embodiments, the network device and the terminal device include corresponding hardware structures and/or software modules for performing the functions. A person skilled in the art should be easily aware that, in combination with the units and the method steps in the examples described in embodiments disclosed in this application, this application can be implemented by using hardware or a combination of the hardware and computer software. Whether a function is performed by hardware or hardware driven by computer software depends on particular application scenarios and design constraints of the technical solutions.

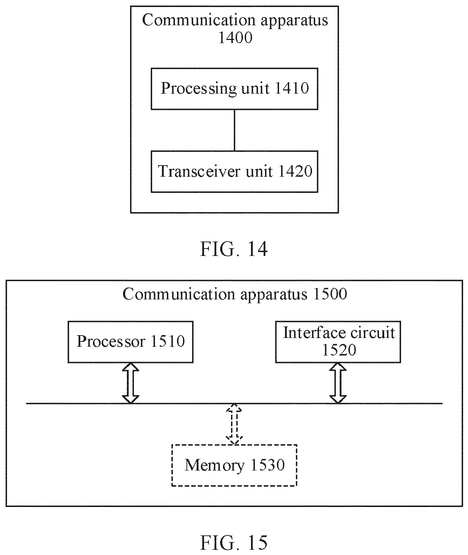

FIG. 14 and FIG. 15 are schematic diagrams of structures of possible communication apparatuses according to embodiments of this application. The communication apparatuses may be configured to implement a function of the terminal device or the network device in the foregoing method embodiments. Therefore, beneficial effects of the foregoing method embodiments can also be implemented. In embodiments of this application, the communication apparatus may be any one of the terminal devices 120a to 120j shown in FIG. 8, may be the network device 110a or 110b shown in FIG. 8, or may be a module (for example, a chip) used in the terminal device or the network device.

As shown in FIG. 14, the communication apparatus 1400 includes a processing unit 1410 and a transceiver unit 1420. The communication apparatus 1400 is configured to implement the function of the terminal device or the network device in the method embodiment shown in FIG. 9.

When the communication apparatus 1400 is configured to implement the function of the terminal device in the method embodiment shown in FIG. 9, the transceiver unit 1420 is configured to receive reference signal configuration information from the network device, where the reference signal configuration information is used for configuring $N_1$ reference signals, $N_1$ is a positive integer, the $N_1$ reference signals correspond to $N$ antenna ports, and $N$ is an integer greater than 1; the processing unit 1410 is configured to: determine $K_1$ first channel vectors based on $K_1$ combination matrices and measurement results of the $N_1$ reference signals on the $N$ antenna ports, and obtain $K_1$ pieces of channel state information CSI based on the $K_1$ first channel vectors; and the transceiver unit 1420 is further configured to send $K_2$ pieces of CSI in the $K_1$ pieces of CSI to the network device.

When the communication apparatus 1400 is configured to implement the function of the network device in the method embodiment shown in FIG. 9, the transceiver unit 1420 is configured to: send reference signal configuration information to the terminal device, where the reference signal configuration information is used for configuring $N_1$ reference signals, and the $N_1$ reference signals correspond to $N$ antenna ports; send the $N_1$ reference signals on the $N$ antenna ports; and receive $K_2$ pieces of channel state information CSI in $K_1$ pieces of CSI from the terminal device; and the processing unit 1410 is configured to process data.

For more detailed descriptions of the processing unit 1410 and the transceiver unit 1420, directly refer to the related descriptions of the method embodiment shown in FIG. 9. Details are not described herein again.

As shown in FIG. 15, the communication apparatus 1500 includes a processor 1510 and an interface circuit 1520. The processor 1510 and the interface circuit 1520 are coupled to each other. It may be understood that, the interface circuit 1520 may be a transceiver or an input/output interface. Optionally, the communication apparatus 1500 may further include a memory 1530, configured to: store instructions executed by the processor 1510, or store input data required by the processor 1510 to run the instructions, or store data generated after the processor 1510 runs the instructions.

When the communication apparatus 1500 is configured to implement the method shown in FIG. 9, the processor 1510 is configured to implement the function of the processing unit 1410, and the interface circuit 1520 is configured to implement the function of the transceiver unit 1420.

When the communication apparatus is the chip used in the terminal device, the chip in the terminal device implements the function of the terminal device in the foregoing method embodiments. The chip in the terminal device receives information from another module (for example, a radio frequency module or an antenna) in the terminal device, where the information is sent by the network device to the terminal device. Alternatively, the chip in the terminal device sends information to another module (for example, a radio frequency module or an antenna) in the terminal device, where the information is sent by the terminal device to the network device.

When the communication apparatus is the module used in the network device, the module in the network device implements the function of the network device in the foregoing method embodiments. The module in the network device receives information from another module (for example, a radio frequency module or an antenna) in the network device, where the information is sent by the terminal device to the network device. Alternatively, the module in the network device sends information to another module (for example, a radio frequency module or an antenna) in the network device, where the information is sent by the network device to the terminal device. The module in the network device herein may be a baseband chip of the network device, or may be a DU or another module. The DU herein may be a DU in an open radio access network (open radio access network, O-RAN) architecture.

It may be understood that, the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. It is clear that the storage medium may be a component of the processor. The processor and the storage medium may be located in the ASIC. In addition, the ASIC may be located in the network device or the terminal device. It is clear that the processor and the storage medium may alternatively exist in the network device or the terminal device as discrete components.

All or some of the foregoing embodiments may be implemented by software, hardware, firmware, or any combination thereof. When the software is used to implement embodiments, all or some of embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired manner or in a wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or nonvolatile storage medium, or may include two types of storage media: the volatile storage medium and the non-volatile storage medium.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

**Claims**

1. A channel state information feedback method, performed by a communication apparatus, wherein the method comprises:

receiving reference signal configuration information from a network device, wherein the reference signal configuration information is used for configuring $N_1$ reference signals, $N_1$ is a positive integer, the $N_1$ reference signals correspond to $N$ antenna ports, and $N$ is an integer greater than 1;
determining $K_1$ first channel vectors based on $K_1$ combination matrices and measurement results of the $N_1$ reference signals on the $N$ antenna ports, wherein an $i^{th}$ combination matrix in the $K_1$ combination matrices is used for combining the $N$ antenna ports into $M_i$ antenna ports, an $i^{th}$ first channel vector in the $K_1$ first channel vectors is a channel vector on the $M_i$ antenna ports, $M_i$ is less than or equal to $N$, $M_i$ is a positive integer, $K_1$ is a positive integer, and $1 \leq K \leq K_1$; obtaining $K_1$ pieces of channel state information CSI based on the $K_1$ first channel vectors; and sending $K_2$ pieces of CSI in the $K_1$ pieces of CSI to the network device, wherein $K_2$ is a positive integer less than or equal to $K_1$.

2. The method according to claim 1, wherein that the $i^{th}$ combination matrix is used for combining the $N$ antenna ports into the $M_i$ antenna ports is specifically as follows: the $i^{th}$ combination matrix is used for combining second channel vectors into the first channel vector on the $M_i$ antenna ports, and the second channel vectors are channel vectors that are on the $N$ antenna ports and that are obtained based on the measurement results on the $N$ antenna ports.

3. The method according to claim 1 or 2, wherein the $N$ antenna ports are grouped into $N_2$ antenna port groups, $N_2$ is an integer greater than 1, different antenna port groups in the $N_2$ antenna port groups correspond to different time domain positions, each antenna port group in the $N_2$ antenna port groups comprises $N_3$ antenna ports, $N_3$ is a positive integer, and $N = N_2 \times N_3$.

4. The method according to claim 3, wherein $N_2 = N_1$, or $N_2/N_1$ is an integer greater than 1.

5. The method according to claim 2, wherein the second channel vector is $H_2$, the $i^{th}$ first channel vector is $H_{1,i}$, $H_{1,i} = A_i \times H_2$, $A_i$ is the $i^{th}$ combination matrix, and $A_i = [a_{m,n}]_{1 \leq m \leq M_i, 1 \leq n \leq N}$, wherein $a_{m,n}$ is an element in an $m^{th}$ row and an $n^{th}$ column of the combination matrix $A_i$.

6. The method according to claim 5, wherein $a_{m,n}$ is 1 or 0; or $a_{m,n}$ is 0 or $a_m$, and $a_m$ is protocol-predefined or $a_m$ is configured by the network device.

7. The method according to claim 5 or 6, wherein $a_{m,n1}$ and $a_{m,n2}$ exist in $A_i$, $a_{m,n1} > 0$, $a_{m,n2} > 0$, and $n1$ is not equal to $n2$.

8. The method according to any one of claims 5 to 7, wherein for $n \notin S_m$, $a_{m,n}=0$, wherein $S_m$ is a precombination port set corresponding to an $m^{th}$ combined port, an intersection set of $S_{m1}$ and $S_{m2}$ is an empty set, and $m_1$ and $m_2$ are sequence numbers of any two different combined ports.

9. The method according to any one of claims 1 to 8, wherein the method further comprises:
receiving first indication information from the network device, wherein the first indication information indicates the $K_1$ combination matrices.

10. The method according to claim 9, wherein the $K_1$ combination matrices are $K_1$ combination matrices in $K$ combination matrices, and the first indication information indicates sequence numbers of the $K_1$ combination matrices in a set comprising the $K$ combination matrices, wherein the $K$ combination matrices are protocol-predefined or indicated by the network device by using second indication information, and $K$ is an integer greater than or equal to $K_1$.

11. The method according to any one of claims 1 to 10, wherein $K_2$ is less than $K_1$, wherein the $K_2$ pieces of CSI are $K_2$ pieces of CSI with a maximum utility function in the $K_1$ pieces of CSI, and the utility function is related to a rank indicator RI and a channel quality indicator CQI in the CSI;

the $K_2$ pieces of CSI are one or more pieces of CSI with a utility function whose fallback value is less than or equal to a first threshold in the $K_1$ pieces of CSI, wherein a fallback value of a utility function of first CSI is a ratio of a utility function of second CSI to the utility function of the first CSI, the second CSI is CSI with a maximum utility function in the $K_1$ pieces of CSI, and the utility function is related to an RI and a CQI in the CSI; or

the $K_2$ pieces of CSI are CSI with a minimum utility function in CSI with a utility function whose fallback value is less than or equal to a first threshold in the $K_1$ pieces of CSI, wherein a fallback value of a utility function of first CSI is a ratio of a utility function of second CSI to the utility function of the first CSI, the second CSI is CSI with a maximum utility function in the $K_1$ pieces of CSI, and the utility function is related to an RI and a CQI in the CSI.

12. The method according to any one of claims 1 to 11, wherein the $M_i$ combined antenna ports are in one-to-one correspondence with $M_i$ digital channels, the $N$ antenna ports are in one-to-one correspondence with $N$ analog channel subarrays, and one digital channel corresponds to one or more analog channel subarrays.

13. A channel state information feedback method, performed by a communication apparatus, wherein the method comprises:

sending reference signal configuration information to a terminal device, wherein the reference signal configuration information is used for configuring $N_1$ reference signals, $N_1$ is a positive integer, the $N_1$ reference signals correspond to

$N$ antenna ports, and $N$ is an integer greater than 1;

sending the $N_1$ reference signals on the $N$ antenna ports; and

receiving $K_2$ pieces of channel state information CSI in $K_1$ pieces of CSI from the terminal device, wherein $K_2$ is a positive integer less than or equal to $K_1$, the $K_1$ pieces of CSI are obtained based on $K_1$ first channel vectors, the $K_1$ first channel vectors are obtained based on $K_1$ combination matrices and measurement results on the $N$ antenna ports, an $i^{th}$ combination matrix in the $K_1$ combination matrices is used for combining the $N$ antenna ports into $M_i$ antenna ports, an $i^{th}$ first channel vector in the $K_1$ first channel vectors is a channel vector on the $M_i$ antenna ports, $M_i$ is less than or equal to $N$, $M_i$ is a positive integer, $K_1$ is a positive integer, and $1 \leq i \leq K_1$.

14. The method according to claim 13, wherein that the $i^{th}$ combination matrix is used for combining the $N$ antenna ports into the $M_i$ antenna ports is specifically as follows: the $i^{th}$ combination matrix is used for combining second channel vectors into the first channel vector on the $M_i$ antenna ports, and the second channel vectors are channel vectors that are on the $N$ antenna ports and that are obtained based on the measurement results on the $N$ antenna ports.

15. The method according to claim 13 or 14, wherein the $N$ antenna ports are grouped into $N_2$ antenna port groups, $N_2$ is an integer greater than 1, different antenna port groups in the $N_2$ antenna port groups correspond to different time domain positions, each antenna port group in the $N_2$ antenna port groups comprises $N_3$ antenna ports, $N_3$ is a positive integer, and $N = N_2 \times N_3$.

16. The method according to claim 15, wherein $N_2 = N_1$, or $N_2/N_1$ is an integer greater than 1.

17. The method according to claim 13, wherein the second channel vector is $H_2$, the $i^{th}$ first channel vector is $H_{1,i}$, $H_{1,i} = A_i \times H_2$, $A_i$ is the $i^{th}$ combination matrix, and $A_i = [a_{m,n}]_{1 \leq m \leq M_i, 1 \leq n \leq N}$, wherein $a_{m,n}$ is an element in an $m^{th}$ row and an $n^{th}$ column of the combination matrix $A_i$.

18. The method according to claim 17, wherein $a_{m,n}$ is 1 or 0; or $a_{m,n}$ is 0 or $a_m$, and $a_m$ is protocol-predefined or $a_m$ is determined by the communication apparatus.

19. The method according to claim 17 or 18, wherein $a_{m,n1}$ and $a_{m,n2}$ exist in $A_i$, $a_{m,n1} > 0$, $a_{m,n2} > 0$, and $n1$ is not equal to $n2$.

20. The method according to any one of claims 17 to 19,

wherein for $n \notin S_m$, $a_{m,n}=0$, wherein $S_m$ is a pre-combination port set corresponding to an $m^{th}$ combined port, an intersection set of $S_{m1}$ and $S_{m2}$ is an empty set, and $m_1$ and $m_2$ are sequence numbers of any two different combined ports.

21. The method according to any one of claims 13 to 20, wherein the method further comprises:
sending first indication information to the terminal device, wherein the first indication information indicates the $K_1$ combination matrices.

22. The method according to claim 21, wherein the $K_1$ combination matrices are $K_1$ combination matrices in $K$ combination matrices, and the first indication information indicates sequence numbers of the $K_1$ combination matrices in a set comprising the $K$ combination matrices, wherein the $K$ combination matrices are protocol-predefined or the $K$ combination matrices are determined by the communication apparatus, and $K$ is an integer greater than or equal to $K_1$.

23. The method according to any one of claims 13 to 22, wherein $K_2$ is less than $K_1$, wherein the $K_2$ pieces of CSI are $K_2$ pieces of CSI with a maximum utility function in the $K_1$ pieces of CSI, and the utility function is related to a rank indicator RI and a channel quality indicator CQI in the CSI;

the $K_2$ pieces of CSI are one or more pieces of CSI with a utility function whose fallback value is less than or equal to a first threshold in the $K_1$ pieces of CSI, wherein a fallback value of a utility function of first CSI is a ratio of a utility function of second CSI to the utility function of the first CSI, the second CSI is CSI with a maximum utility function in the $K_1$ pieces of CSI, and the utility function is related to an RI and a CQI in the CSI; or

the $K_2$ pieces of CSI are CSI with a minimum utility function in CSI with a utility function whose fallback value is less than or equal to a first threshold in the $K_1$ pieces of CSI, wherein a fallback value of a utility function of first CSI is a ratio of a utility function of second CSI to the utility function of the first CSI, the second CSI is CSI with a maximum utility function in the $K_1$ pieces of CSI, and the utility function is related to an RI and a CQI in the CSI.

24. The method according to any one of claims 13 to 23, wherein the $M_i$ combined antenna ports are in one-to-one correspondence with $M_i$ digital channels, the $N$ antenna ports are in one-to-one correspondence with $N$ analog channel subarrays, and one digital channel corresponds to one or more analog channel subarrays.

**25.** A communication apparatus, comprising a module configured to perform the method according to any one of claims 1 to 12, or comprising a module configured to perform the method according to any one of claims 13 to 24.

**26.** A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 12 by using a logic circuit or by executing code instructions, or the processor is configured to implement the method according to any one of claims 13 to 24 by using the logic circuit or by executing the code instructions.

**27.** A computer-readable storage medium, wherein the storage medium stores a computer program or instructions, and when the computer program or the instructions are executed by a communication apparatus, the method according to any one of claims 1 to 12 is implemented, or the method according to any one of claims 13 to 24 is implemented.

**28.** A computer program product, wherein the computer program product comprises computer program code, and when the computer program code is run by a computer, the computer is enabled to perform the method according to any one of claims 1 to 12, or the computer is enabled to perform the method according to any one of claims 13 to 24.

FIG. 1

FIG. 2

FIG. 3

FIG. 4

FIG. 5

FIG. 6

FIG. 7

FIG. 8

Network device

Terminal device

901: Send reference signal configuration information, where the reference signal configuration information is used for configuring $N_1$ reference signals, and the $N_1$ reference signals correspond to $N$ antenna ports

902: Send the $N_1$ reference signals on the $N$ antenna ports

903: Determine $K_1$ first channel vectors based on $K_1$ combination matrices and measurement results of the $N_1$ reference signals on the $N$ antenna ports, where an $i^{th}$ combination matrix in the $K_1$ combination matrices is used for combining the $N$ antenna ports into $M_i$ antenna ports, and an $i^{th}$ first channel vector in the $K_1$ first channel vectors is a channel vector on the $M_i$ antenna ports

904: Obtain $K_1$ pieces of CSI based on the $K_1$ first channel vectors

905: Send $K_2$ pieces of CSI in the $K_1$ pieces of CSI

FIG. 9

FIG. 10

31

Digital channel 1 — DAC

Digital channel 2 — DAC

Analog channel subarray corresponding to an antenna port group 1

Analog channel subarray corresponding to an antenna port group 2

Analog channel subarray corresponding to an antenna port group 3

Analog channel subarray corresponding to an antenna port group 4

FIG. 11

| Network device | | Terminal device |
|---|---|---|

1201: Send CSI report configuration information to the terminal device, where the CSI report configuration information includes reference signal configuration information and second indication information, the reference signal configuration information is used for configuring four CSI-RSs, the four CSI-RSs correspond to eight antenna ports, and the second indication information indicates $K$ combination matrices

1202: Send the four CSI-RSs on the eight antenna ports

1203: Measure the four CSI-RSs sent on the eight antenna ports, to obtain second channel vectors on the eight antenna ports

1204: Send first indication information to the terminal device by using MAC-CE signaling or DCI signaling, where the first indication information indicates sequence numbers of $K_1$ combination matrices in a set including the $K$ combination matrices

1205: Determine $K_1$ first channel vectors based on the $K_1$ combination matrices and the second channel vector

1206: Obtain $K_1$ pieces of CSI based on the $K_1$ first channel vectors

1207: Send $K_2$ pieces of CSI in the $K_1$ pieces of CSI to the network device

FIG. 12

```
┌─────────────────┐                    ┌─────────────────┐
│ Network device  │                    │ Terminal device │
└─────────────────┘                    └─────────────────┘
         │                                      │
         │  1301: Send CSI report configuration │
         │  information to the terminal device, where │
         │  the CSI report configuration information │
         │  includes reference signal configuration │
         │     information and second indication │
         │     information, the reference signal │
         │   configuration information is used for │
         │    configuring one CSI-RS, the CSI-RS │
         │  corresponds to 64 antenna ports, and the │
         │ second indication information indicates K │
         │          combination matrices        │
         │ ────────────────────────────────────▶│
         │     1302: Send one CSI-RS on the 64  │
         │            antenna ports             │
         │ ────────────────────────────────────▶│
```

1303: Measure one CSI-RS sent on the 64 antenna ports, to obtain second channel vectors on the 64 antenna ports

1304: Send first indication information to the terminal device by using MAC-CE signaling or DCI signaling, where the first indication information indicates sequence numbers of $K_1$ combination matrices in a set including the $K$ combination matrices

1305: Determine $K_1$ first channel vectors based on the $K_1$ combination matrices and the second channel vector

1306: Obtain $K_1$ pieces of CSI based on the $K_1$ first channel vectors

1307: Send $K_2$ pieces of CSI in the $K_1$ pieces of CSI to the network device

FIG. 13

Communication apparatus 1400

Processing unit 1410

Transceiver unit 1420

FIG. 14

Communication apparatus 1500

Processor 1510

Interface circuit 1520

Memory 1530

FIG. 15

## INTERNATIONAL SEARCH REPORT

| International application No. |
|---|
| **PCT/CN2022/103861** |

| A. | CLASSIFICATION OF SUBJECT MATTER |
|---|---|
| | H04B 7/06(2006.01)i; H04B 7/04(2017.01)i; H04L 1/06(2006.01)i |

According to International Patent Classification (IPC) or to both national classification and IPC

| B. | FIELDS SEARCHED |
|---|---|

Minimum documentation searched (classification system followed by classification symbols)

H04B7/-, H04L1/-

Documentation searched other than minimum documentation to the extent that such documents are included in the fields searched

Electronic data base consulted during the international search (name of data base and, where practicable, search terms used)

CNTXT, CNABS, CNKI: 图样, pattern, 图案, reference signal?, 参考信号, RS, 测量结果, 测量信息, 测量值, 合并矩阵, 合并向量, 信道向量, 信道矩阵, 信道状态信息, CSI, channel stat+ indicat+; VEN, EPTXT, WOTXT, USTXT, 3GPP: pattern?, reference signal?, RS, measurement result?, combin+, merg+, matrix, vector?, CSI, channel stat+ indicat+

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 110875766 A (TELECOMMUNICATIONS TECHNOLOGY RESEARCH INSTITUTE CO., LTD.) 10 March 2020 (2020-03-10) description, paragraphs [0094]-[0139] | 1-28 |
| A | CN 107529691 A (SHANGHAI LANGBO COMMUNICATION TECHNOLOGY CO., LTD.) 02 January 2018 (2018-01-02) abstract | 1-28 |
| A | CN 106160934 A (CHINA MOBILE COMMUNICATIONS CORP.) 23 November 2016 (2016-11-23) entire document | 1-28 |
| A | CN 107888265 A (ZTE CORP.) 06 April 2018 (2018-04-06) entire document | 1-28 |
| A | CN 106301507 A (THE RESEARCH INSTITUTE OF TELECOMMUNICATIONS TRANSMISSION, MIIT) 04 January 2017 (2017-01-04) entire document | 1-28 |
| A | WO 2021093204 A1 (ZTE CORP.) 20 May 2021 (2021-05-20) entire document | 1-28 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **202209（2** | **28 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/103861** |

**C.    DOCUMENTS CONSIDERED TO BE RELEVANT**

| Category* | Citation of document, with indication, where appropriate, of the relevant passages | Relevant to claim No. |
| --- | --- | --- |
| A | NTT DOCOMO. "R1-094913 "Investigation on Quantization Scheme of Explicit Spatial Channel Feedback for CoMP Joint Transmission in LTE-Advanced"" *3GPP tsg_ran\WG1_RL1*, 03 November 2009 (2009-11-03), | 1-28 |

Form PCT/ISA/210 (second sheet) (January 2015)

INTERNATIONAL SEARCH REPORT
Information on patent family members

International application No.

**PCT/CN2022/103861**

| Patent document cited in search report | | | Publication date (day/month/year) | Patent family member(s) | | | Publication date (day/month/year) |
|---|---|---|---|---|---|---|---|
| CN | 110875766 | A | 10 March 2020 | CN | 110875766 | B | 25 May 2021 |
| CN | 107529691 | A | 02 January 2018 | CN | 107529691 | B | 06 November 2020 |
| CN | 106160934 | A | 23 November 2016 | WO | 2016161963 | A1 | 13 October 2016 |
|  |  |  |  | CN | 106160934 | B | 02 August 2019 |
| CN | 107888265 | A | 06 April 2018 | EP | 3522388 | A1 | 07 August 2019 |
|  |  |  |  | EP | 3793099 | A1 | 17 March 2021 |
|  |  |  |  | WO | 2018059087 | A1 | 05 April 2018 |
|  |  |  |  | US | 2019312615 | A1 | 10 October 2019 |
|  |  |  |  | CN | 107888265 | B | 23 August 2019 |
|  |  |  |  | EP | 3522388 | A4 | 15 April 2020 |
|  |  |  |  | US | 10742272 | B2 | 11 August 2020 |
| CN | 106301507 | A | 04 January 2017 | CN | 106301507 | B | 13 September 2019 |
| WO | 2021093204 | A1 | 20 May 2021 | None | | | |

Form PCT/ISA/210 (patent family annex) (January 2015)

**REFERENCES CITED IN THE DESCRIPTION**

**Patent documents cited in the description**

• CN 202110877183